# EUROPEAN PATENT APPLICATION

(11) **EP 3 905 246 A1**
(43) Date of publication of application: **03.11.2021**
(21) Application number: 20762220.0
(22) Date of filing: 21.02.2020
(51) Int. Cl.: G11B 20/10

(54) **SONG RECORDING METHOD, SOUND CORRECTION METHOD AND ELECTRONIC DEVICE**

(30) Priority: 28.02.2019 CN 201910152655
(71) Applicant: Huawei Technologies Co., Ltd., Longgang District, Shenzhen, Guangdong 518129, (CN)
(72) Inventor: TAO, Kai, Shenzhen, Guangdong 518129 (CN); YIN, Mingjie, Shenzhen, Guangdong 518129 (CN); LI, Yanqi, Shenzhen, Guangdong 518129 (CN); XU, Dezhu, Shenzhen, Guangdong 518129 (CN); DAI, Hengjie, Shenzhen, Guangdong 518129 (CN); MIAO, Haibo, Shenzhen, Guangdong 518129 (CN)
(74) Representative: Maiwald Patent- und Rechtsanwaltsgesellschaft mbH
(86) International application number: PCT/CN2020/076099
(87) International publication number: WO 2020/173391

(57) **Abstract**

Embodiments of this application provide a song recording method, an audio correction method, and an electronic device, and relate to the field of audio technologies. A corresponding singing skill may be added to a song recorded by a user, to improve a recording effect and use experience when the user uses a karaoke application. The method includes: displaying, by an electronic device, a first interface, where the first interface includes a recording button used to record a first song; in response to an operation of selecting the recording button by a user, obtaining, by the electronic device, accompaniment of the first song and feature information of a cappella of an original singer, where the feature information of the a cappella of the original singer may be used to reflect a singing feature of the original singer when the original singer sings the first song; starting, by the electronic device, to play the accompaniment of the first song, and starting to record a cappella of the user that is sung by the user; and in a process of recording the a cappella of the user, displaying, by the electronic device, guidance information on a second interface based on the feature information of the a cappella of the original singer, where the guidance information is used to guide one or more of breathing and vibrato during the user's singing.

## Description

This application claims priority to Chinese Patent Application No. 201910152655.3, filed with the China National Intellectual Property Administration on February 28, 2019 and entitled "SONG RECORDING METHOD, AUDIO CORRECTION METHOD, AND ELECTRONIC DEVICE", which is incorporated herein by reference in its entirety.

### TECHNICAL FIELD

This application relates to the field of audio technologies, and in particular, to a song recording method, an audio correction method, and an electronic device.

### BACKGROUND

For a user who loves singing, a karaoke application has become a popular application installed on an electronic device such as a mobile phone or a tablet computer. For example, after opening the karaoke application, the user may select a song that needs to be recorded. Further, the karaoke application may load accompaniment of the song, and invoke a sound pickup component such as a microphone on the mobile phone to record audio obtained after the user sings the song, thereby integrating the user's own singing voice into the accompaniment provided by the karaoke application.

Currently, to improve the user's singing experience of using the karaoke application, some karaoke applications provide an audio correction function for a song recorded by the user. For example, the karaoke application may compare a song A recorded by the user with original audio of the song A, and modify intonation and rhythm of the singing voice recorded by the user to intonation and rhythm in the original audio, thereby correcting intonation and rhythm problems that appear when the user records the song.

However, in addition to the intonation and rhythm problems, a common user generally has not undergone professional vocal music training. Therefore, a user with insufficient singing skills still cannot achieve a good recording effect when recording a song.

### SUMMARY

This application provides a song recording method, an audio correction method, and an electronic device, to guide a user to use a corresponding singing skill when the user records a song, thereby improving a recording effect and use experience when the user uses a karaoke application.

To achieve the foregoing objective, the following technical solutions are used in this application.

According to a first aspect, this application provides a song recording method, including: displaying, by an electronic device, a first interface, where the first interface includes a recording button used to record a first song; if it is detected that a user selects the recording button, obtaining, by the electronic device, accompaniment of the first song and feature information of a cappella of an original singer, where the feature information of the a cappella of the original singer may be used to reflect a singing feature of the original singer when the original singer sings the first song; further, starting, by the electronic device, to play the accompaniment of the first song, and starting to record a cappella of the user that is sung by the user; and in a process of recording the a cappella of the user, displaying, by the electronic device, guidance information on a second interface based on the feature information of the a cappella of the original singer, where the guidance information is used to guide one or more of breathing and vibrato during the user's singing. In other words, when the user is recording the song, the electronic device may display the guidance information based on the singing feature of the original singer, to guide one or more singing skills such as breathing or vibrato during the user's singing, thereby improving a recording effect and use experience when the user records the song.

In a possible implementation, the feature information of the a cappella of the original singer includes a breathing location in the a cappella of the original singer, and in this case, the guidance information may include a breathing prompt. The displaying, by the electronic device, guidance information on a second interface based on the feature information of the a cappella of the original singer includes: displaying, by the electronic device on the second interface based on the breathing location in the a cappella of the original singer, a breathing prompt corresponding to the breathing location in the a cappella of the original singer, to help the user control breath variation during singing, thereby reducing relatively obvious and disordered breathing sound in the recorded song, to improve listening quality of the recorded song.

For example, the second interface may include lyrics of the first song. In this case, the displaying, by the electronic device on the second interface based on the breathing location in the a cappella of the original singer, a breathing prompt corresponding to the breathing location in the a cappella of the original singer includes: displaying, by the electronic device, the breathing prompt at a first location of the lyrics, where the first location is the same as the breathing location in the a cappella of the original singer.

Alternatively, the second interface may include a singing tool, and the singing tool is configured to display a note of each word in lyrics being recorded. In this case, the displaying, by the electronic device on the second interface based on the breathing location in the a cappella of the original singer, a breathing prompt corresponding to the breathing location in the a cappella of the original singer includes: displaying, by the electronic device, the breathing prompt at a second location of the singing tool, where the second location is the same as the breathing location in the a cappella of the original singer.

In a possible implementation, the feature information of the a cappella of the original singer includes a vibrato feature of the a cappella of the original singer, and in this case, corresponding guidance information includes a vibrato prompt. The displaying, by the electronic device, guidance information on a second interface based on the feature information of the a cappella of the original singer includes: displaying, by the electronic device on the second interface based on the vibrato feature of the a cappella of the original singer, a vibrato prompt corresponding to the vibrato feature of the a cappella of the original singer. In this way, when recording the song, the user may sing with vibrato based on a vibrato location prompted in the lyrics, to improve a sense of hierarchy of the song and a singing skill when the user is singing, thereby improving listening quality of the recorded song.

For example, the vibrato feature includes the vibrato location, and the second interface includes the lyrics of the first song. In this case, the displaying, by the electronic device on the second interface based on the vibrato feature of the a cappella of the original singer, a vibrato prompt corresponding to the vibrato feature of the a cappella of the original singer includes: displaying, by the electronic device, the vibrato prompt at a third location of the lyrics, where the third location is the same as a vibrato location in the a cappella of the original singer.

Alternatively, the vibrato feature includes the vibrato location, the second interface includes a singing tool, and the singing tool is configured to display a note of each word in lyrics being recorded. In this case, the displaying, by the electronic device on the second interface based on the vibrato feature of the a cappella of the original singer, a vibrato prompt corresponding to the vibrato feature of the a cappella of the original singer includes: displaying, by the electronic device, the vibrato prompt at a fourth location of the singing tool, where the fourth location is the same as a vibrato location in the a cappella of the original singer.

For example, the feature information of the a cappella of the original singer may further include fundamental frequency information of the a cappella of the original singer, and the electronic device may generate an intonation prompt based on the fundamental frequency information of the a cappella of the original singer and display the intonation prompt on the second interface, to guide intonation of the user during singing.

In a possible implementation, in a process of recording the a cappella of the user, the method further includes: extracting, by the electronic device, feature information of the a cappella of the user from the a cappella of the user, where the feature information of the a cappella of the user is used to reflect a singing feature of the user when the user sings the first song; and displaying, by the electronic device, an evaluation result on the second interface by comparing the feature information of the a cappella of the user with the feature information of the a cappella of the original singer.

It can be learned that, in a song recording process of the user, the electronic device may evaluate one or more singing skills such as intonation, vibrato, and breathing of the user's singing in real time based on the feature information of the a cappella of the original singer. Compared with evaluating a singing level of the user only based on intonation, in this embodiment of this application, factors such as breathing and vibrato of the user are also considered during evaluation of the user's singing, and therefore, the obtained evaluation result is more accurate, abundant, and objective. In addition, the electronic device may feed back the evaluation result of the user's singing to the user in real time on the second interface, so that the user learns a current singing effect of the user in time, and the user can adjust a singing manner in time in a subsequent recording process.

In a possible implementation, the feature information of the a cappella of the user includes a breathing location in the a cappella of the user, and the feature information of the a cappella of the original singer includes the breathing location in the a cappella of the original singer. The displaying, by the electronic device, an evaluation result on the second interface by comparing the feature information of the a cappella of the user with the feature information of the a cappella of the original singer includes: displaying, by the electronic device, an evaluation result of a breathing skill on the second interface by comparing the breathing location in the a cappella of the user with the breathing location in the a cappella of the original singer.

For example, the displaying, by the electronic device, an evaluation result of a breathing skill on the second interface by comparing the breathing location in the a cappella of the user with the breathing location in the a cappella of the original singer includes: if the breathing location in the a cappella of the user is the same as the breathing location in the a cappella of the original singer, displaying, by the electronic device on the second interface, a prompt indicating accurate breathing; or if the breathing location in the a cappella of the user is different from the breathing location in the a cappella of the original singer, displaying, by the electronic device on the second interface, a prompt indicating a breathing error.

In a possible implementation, the feature information of the a cappella of the user includes a vibrato feature of the a cappella of the user, and the feature information of the a cappella of the original singer includes a vibrato feature of the a cappella of the original singer. The displaying, by the electronic device, an evaluation result on the second interface by comparing the feature information of the a cappella of the user with the feature information of the a cappella of the original singer includes: displaying, by the electronic device, an evaluation result of a vibrato skill on the second interface by comparing the vibrato feature of the a cappella of the user with the vibrato feature of the a cappella of the original singer.

For example, the displaying, by the electronic device, an evaluation result of a vibrato skill on the second interface by comparing the vibrato feature of the a cappella of the user with the vibrato feature of the a cappella of the original singer includes: if the vibrato feature of the a cappella of the user is the same as the vibrato feature of the a cappella of the original singer, displaying, by the electronic device on the second interface, a prompt indicating accurate vibrato; or if the vibrato feature of the a cappella of the user is different from the vibrato feature of the a cappella of the original singer, displaying, by the electronic device on the second interface, a prompt indicating a vibrato error.

In a possible implementation, the displaying, by the electronic device, an evaluation result on the second interface includes: displaying, by the electronic device, the evaluation result in the lyrics on the second interface; or displaying, by the electronic device, the evaluation result in the singing tool on the second interface.

In a possible implementation, after the displaying, by the electronic device, guidance information on a second interface based on the feature information of the a cappella of the original singer, the method further includes: after recording of the first song ends, correcting, by the electronic device based on the feature information of the a cappella of the original singer, a singing problem that appears in the a cappella of the user, where the singing problem includes one or more of a breathing problem and a vibrato problem. In this way, a common user who has not undergone professional vocal music training can also record singing voice with relatively good listening quality, thereby improving a recording effect and use experience when the user records the song.

According to a second aspect, this application provides an audio correction method, including: displaying, by an electronic device, a first interface, where the first interface includes a recording button used to record a first song; if it is detected that a user selects the recording button, obtaining, by the electronic device, accompaniment of the first song and feature information of a cappella of an original singer, where the feature information of the a cappella of the original singer is used to reflect a singing feature of the original singer when the original singer sings the first song; further, starting, by the electronic device, to play the accompaniment of the first song, and starting to record a cappella of the user that is sung by the user; and after recording of the first song ends, correcting, by the electronic device based on the feature information of the a cappella of the original singer, a singing problem that appears in the recorded a cappella of the user, where the singing problem includes one or more of a breathing problem and a vibrato problem. In other words, the electronic device may correct a singing skill problem such as breathing or vibrato in a song recorded by the user. In this way, a common user who has not undergone professional vocal music training can also record singing voice with relatively good listening quality, thereby improving a recording effect and use experience when the user records the song.

In a possible implementation, the singing problem is a breathing problem. The correcting, by the electronic device based on the feature information of the a cappella of the original singer, a singing problem that appears in the a cappella of the user includes: extracting, by the electronic device, breathing sound in the a cappella of the user from the a cappella of the user; and reducing, by the electronic device, energy and a frequency response that are of the breathing sound in the a cappella of the user, to weaken the breathing problem that appears in the a cappella of the user, thereby improving listening quality of the recorded song.

In a possible implementation, the singing problem is a vibrato problem. The correcting, by the electronic device based on the feature information of the a cappella of the original singer, a singing problem that appears in the a cappella of the user includes: extracting, by the electronic device, a vibrato feature of the a cappella of the user from the a cappella of the user; and if the vibrato feature of the a cappella of the user does not match a vibrato feature in the feature information of the a cappella of the original singer, for example, one of a vibrato location, a vibrato amplitude, a vibrato frequency, and a stable trend item in the a cappella of the user does not match the a cappella of the original singer, correcting, by the electronic device, the vibrato feature of the a cappella of the user by using the vibrato feature of the a cappella of the original singer, to correct the vibrato problem that appears in the a cappella of the user. For example, the electronic device may synthesize new vibrato in the a cappella of the user by using a vibrato amplitude, a vibrato frequency, or a stable trend item of corresponding vibrato in the a cappella of the original singer, to improve a vibrato sound effect that appears in the a cappella of the user.

Certainly, the singing problem may be alternatively an intonation problem. The electronic device may perform tone-falling processing on a location at which a tone is excessively high in the a cappella of the user, and perform tone-rising processing on a location at which a tone is excessively low in the a cappella of the user, so that a tone in the a cappella of the user is the same as or close to a tone in the a cappella of the original singer.

In a possible implementation, after recording of the first song ends, the method further includes: displaying, by the electronic device, a second interface, where the second interface includes an audio correction switch. The correcting, by the electronic device based on the feature information of the a cappella of the original singer, a singing problem that appears in the a cappella of the user includes: if it is detected that the user turns on the audio correction switch, correcting, by the electronic device based on the feature information of the a cappella of the original singer, the singing problem that appears in the a cappella of the user.

In a possible implementation, after recording of the first song ends, the method further includes: displaying, by the electronic device, a second interface, where the second interface includes an audio correction option, and the audio correction option includes an intonation correction option, a breathing audio correction option, and a vibrato correction option. The correcting, by the electronic device based on the feature information of the a cappella of the original singer, a singing problem that appears in the a cappella of the user includes: in response to the audio correction option selected by the user, correcting, by the electronic device based on the feature information of the a cappella of the original singer, a singing problem that corresponds to the audio correction option and that appears in the a cappella of the user.

In a possible implementation, after recording of the first song ends, the method further includes: displaying, by the electronic device, a second interface, where the second interface includes a single-sentence refinement option; and in response to the user's selection of the single-sentence refinement option, displaying, by the electronic device, a third interface, where the third interface includes N (N>1) sentences of lyrics of the first song. In this case, the correcting, by the electronic device based on the feature information of the a cappella of the original singer, a singing problem that appears in the a cappella of the user specifically includes: if the user selects first lyrics from the N sentences of the lyrics, correcting, by the electronic device based on the feature information that is in the a cappella of the original singer and that is obtained after the original singer sings the first lyrics, a singing problem that corresponds to the first lyrics and that appears in the a cappella of the user. In this way, the user may correct, sentence by sentence, the singing problem that appears in the a cappella of the user recorded this time, to correct the song recorded by the user to a singing effect that the user is more satisfied with.

In addition, when displaying the third interface, the electronic device may further mark, in the N sentences of the lyrics on the third interface, a location at which the singing problem appears. In this way, the user can intuitively see a specific problem that appears when the user sings each sentence of the lyrics.

According to a third aspect, this application provides an electronic device, including: a touchscreen, one or more processors, one or more memories, one or more microphones, and one or more computer programs. The processor is coupled to the touchscreen, the memory, and the microphone. The one or more computer programs are stored in the memory. When the electronic device runs, the processor executes the one or more computer programs stored in the memory, so that the electronic device performs the song recording method or the audio correction method according to any one of the foregoing implementations.

According to a fourth aspect, this application provides a computer storage medium, including a computer instruction. When the computer instruction runs on an electronic device, the electronic device is enabled to perform the song recording method or the audio correction method according to any implementation of the first aspect.

According to a fifth aspect, this application provides a computer program product. When the computer program product runs on an electronic device, the electronic device is enabled to perform the song recording method or the audio correction method according to any implementation of the first aspect.

According to a sixth aspect, this application provides a graphical user interface (GUI), where the graphical user interface is stored in an electronic device, the electronic device includes a touchscreen, a memory, and a processor. The processor is configured to execute one or more computer programs stored in the memory. The graphical user interface includes: a first GUI displayed on the touchscreen, and the first GUI includes a recording button used to record a first song, a second GUI displayed on the touchscreen in response to a touch event for the recording button, where the second GUI is a recording interface for recording the first song, the second GUI includes guidance information for guiding a user to sing the first song, and the guidance information may include a breathing prompt and/or a vibrato prompt.

For example, the second GUI may further include an evaluation result of a breathing skill and/or a vibrato skill of the user during singing.

For example, after the second GUI is displayed on the touchscreen, the GUI further includes: a third GUI displayed on the touchscreen after recording of the first song ends, where the third GUI is an audio correction interface of the first song, and the third GUI includes an audio correction switch; and when the audio correction switch is turned on by the user, the electronic device corrects a breathing problem and/or a vibrato problem that appear in a cappella of the user.

It may be understood that, the electronic device provided in the third aspect, the computer storage medium provided in the fourth aspect, the computer program product provided in the fifth aspect, and the GUI provided in the sixth aspect are all configured to perform corresponding methods provided above. Therefore, for beneficial effects that can be achieved, refer to beneficial effects in the corresponding methods provided above. Details are not described herein again.

### BRIEF DESCRIPTION OF DRAWINGS

FIG. 1 is a schematic structural diagram 1 of an electronic device according to an embodiment of this application;
FIG. 2 is a schematic architectural diagram of an operating system in an electronic device according to an embodiment of this application;
FIG. 3 is a schematic flowchart of a song recording method and an audio correction method according to an embodiment of this application;
FIG. 4 is a schematic diagram 1 of a scenario of a song recording method according to an embodiment of this application;
FIG. 5 is a schematic diagram 2 of a scenario of a song recording method according to an embodiment of this application;
FIG. 6 is a schematic diagram 3 of a scenario of a song recording method according to an embodiment of this application;
FIG. 7 is a schematic diagram 4 of a scenario of a song recording method according to an embodiment of this application;
FIG. 8 is a schematic diagram 5 of a scenario of a song recording method according to an embodiment of this application;
FIG. 9A and FIG. 9B are a schematic diagram 6 of a scenario of a song recording method according to an embodiment of this application;
FIG. 10(a), FIG. 10(b), and FIG. 10(c) are a schematic diagram 7 of a scenario of a song recording method according to an embodiment of this application;
FIG. 11(a) and FIG. 11(b) are a schematic diagram 8 of a scenario of a song recording method according to an embodiment of this application;
FIG. 12(a) and FIG. 12(b) is a schematic diagram 9 of a scenario of a song recording method according to an embodiment of this application;
FIG. 13 is a schematic diagram 1 of a scenario of an audio correction method according to an embodiment of this application;
FIG. 14 is a schematic diagram 2 of a scenario of an audio correction method according to an embodiment of this application;
FIG. 15(a) and FIG. 15(b) are a schematic diagram 3 of a scenario of an audio correction method according to an embodiment of this application;
FIG. 16(a) and FIG. 16(b) are a schematic diagram 4 of a scenario of an audio correction method according to an embodiment of this application; and
FIG. 17 is a schematic structural diagram 2 of an electronic device according to an embodiment of this application.

### DESCRIPTION OF EMBODIMENTS

The following describes the implementations of the embodiments in detail with reference to the accompanying drawings.

For example, a song recording method and an audio correction method provided in the embodiments of this application may be applied to electronic devices such as a mobile phone, a tablet computer, a notebook computer, an ultra-mobile personal computer (ultra-mobile personal computer, UMPC), a handheld computer, a netbook, a personal digital assistant (personal digital assistant, PDA), a wearable electronic device, and a virtual reality device. This is not limited in the embodiments of this application.

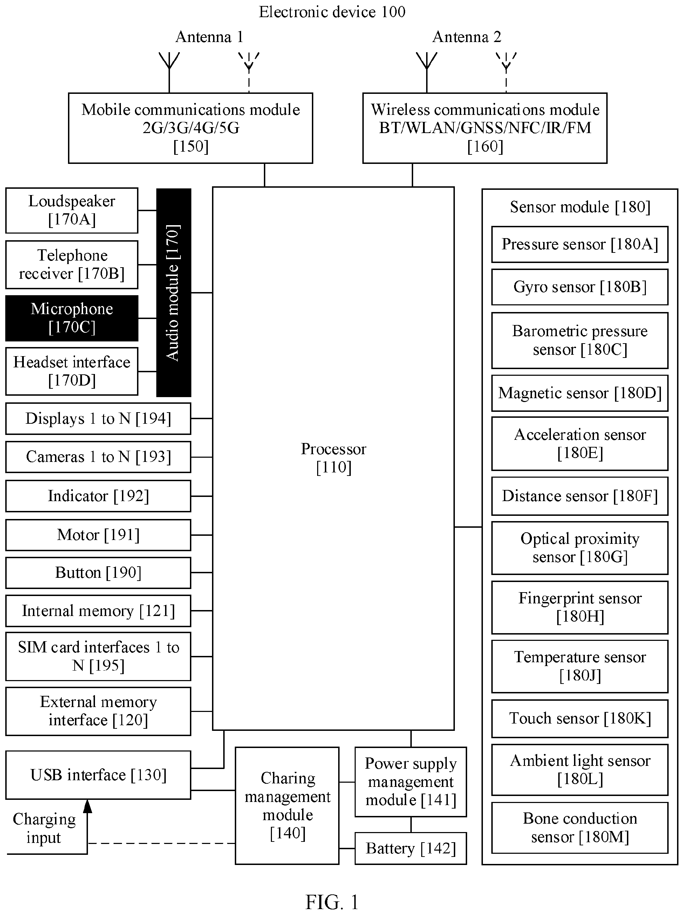

For example, FIG. 1 is a schematic structural diagram of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a loudspeaker 170A, a telephone receiver 170B, a microphone 170C, a headset interface 170D, a sensor module 180, a button 190, a motor 191, an indicator 192, a camera 193, a display 194, and a subscriber identity module (subscriber identification module, SIM) card interface 195. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not specifically limit the electronic device 100. In some other embodiments of this application, the electronic device 100 may include more or fewer parts than those shown in the figure, or combine some parts, or split some parts, or have different part arrangements. The parts shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to control a fetch instruction and an execute instruction.

A memory may be further disposed in the processor 110, and is configured to store an instruction and data. In some embodiments, the memory in the processor 110 is a cache memory. The memory may store an instruction or data that is just used or cyclically used by the processor 110. If the processor 110 needs to use the instruction or the data again, the processor 110 may directly invoke the instruction or the data from the memory, thereby avoiding repeated access and reducing waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes one serial data line (serial data line, SDA) and one serial clock line (derail clock line, SCL). In some embodiments, the processor 110 may include a plurality of I2C buses. The processor 110 may be separately coupled to the touch sensor 180K, a charger, a camera flash, the camera 193, and the like by using different I2C bus interfaces. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of I2S buses. The processor 110 may be coupled to the audio module 170 by using the I2S bus, to implement communication between the processor 110 and the audio module 170. In some embodiments, the audio module 170 may transmit an audio signal to the wireless communications module 160 by using the I2S interface, to implement a function of answering a call by using a Bluetooth headset.

The PCM interface may also be used for audio communication, and sampling, quantization, and encoding of an analog signal. In some embodiments, the audio module 170 may be coupled to the wireless communications module 160 by using the PCM bus interface. In some embodiments, the audio module 170 may also transmit an audio signal to the wireless communications module 160 by using the PCM interface, to implement the function of answering a call by using the Bluetooth headset. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 by using the UART interface, to implement a Bluetooth function. In some embodiments, the audio module 170 may transmit an audio signal to the wireless communications module 160 by using the UART interface, to implement a function of playing music by using the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display 194 by using the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, and the like. The GPIO interface may be alternatively configured as an I2C interface, an I2S interface, a UART interface, an MIPI interface, or the like.

It may be understood that, an interface connection relationship between modules shown in this embodiment of the present invention is merely a schematic description, and does not limit a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of the wired charger by using the USB interface 130. In some embodiments of wireless charging, the charging management module 140 may receive wireless charging input by using a wireless charging coil of the electronic device 100. While charging the battery 142, the charging management module 140 may further supply power to the electronic device by using the power management module 141.

The power management module 141 is configured to connect the battery 142, the charging management module 140, and the processor 110. The power management module 141 receives input of the battery 142 and/or the charging management module 140, and supplies power to the processor 110, the internal memory 121, the display 194, the camera 193, the wireless communications module 160, and the like. The power management module 141 may be further configured to monitor parameters such as a battery capacity, a quantity of battery cycle times, and a battery health status (electric leakage or impedance). In some other embodiments, the power management module 141 may be alternatively disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover a single communications frequency band or a plurality of communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 may provide a solution for wireless communications including 2G/3G/4G/5G and the like applied to the electronic device 100. The mobile communications module 150 may include one or more filters, one or more switches, one or more power amplifiers, one or more low noise amplifiers (low noise amplifier, LNA), and the like. The mobile communications module 150 may receive an electromagnetic wave by using the antenna 1, perform processing such as filtering or amplification on the received electromagnetic wave, and transfer the electromagnetic wave to the modem processor for demodulation. The mobile communications module 150 may further amplify a signal modulated by the modem processor, convert the signal into an electromagnetic wave by using the antenna 1, and radiate the electromagnetic wave. In some embodiments, at least some functional modules of the mobile communications module 150 may be disposed in the processor 110. In some embodiments, at least some functional modules in the mobile communications module 150 and at least some modules in the processor 110 may be disposed in a same component.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and is then transferred to the application processor. The application processor outputs a sound signal by using an audio device (which is not limited to the loudspeaker 170A, the telephone receiver 170B, or the like), or displays an image or a video by using the display 194. In some embodiments, the modem processor may be an independent component. In some other embodiments, the modem processor may be independent of the processor 110, and is disposed in a same component with the mobile communications module 150 or another functional module.

The wireless communications module 160 may provide a solution for wireless communications including a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communications module 160 may one or more components integrated with one or more communication processing modules. The wireless communications module 160 receives an electromagnetic wave by using the antenna 2, performs frequency modulation and filtering processing on the electromagnetic wave signal, and sends a processed signal to the processor 110. The wireless communications module 160 may further receive a to-be-sent signal from the processor 110, perform frequency modulation on the signal and amplify the signal, convert the signal into an electromagnetic wave by using the antenna 2, and radiate the electromagnetic wave.

In some embodiments, the antenna 1 and the mobile communications module 150 of the electronic device 100 are coupled, and the antenna 2 and the wireless communications module 160 are coupled, so that the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS)), and/or a satellite-based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and is used for image rendering. The processor 110 may include one or more GPUs that execute a program instruction to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini LED, a micro LED, a micro OLED, a quantum dot light-emitting diode (quantum dot light emitting diodes, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is enabled, light is transferred to a photosensitive element of the camera through a lens, an optical signal is converted into an electrical signal, and the photosensitive element of the camera transfers the electrical signal to the ISP for processing, to convert the electrical signal into an image that can be seen. The ISP may further perform algorithm optimization for noise, luminance, and complexion of the image. The ISP may further optimize parameters such as exposure and color temperature of a photographing scene. In some embodiments, the ISP may be disposed in the camera 193.

The camera 193 is configured to capture a static image or a video. An optical image of an object is generated by using the lens, and is projected to the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 can support one or more video codecs. In this way, the electronic device 100 can play or record videos in a plurality of encoding formats, for example, moving picture experts group (moving picture experts group, MPEG) 1, MPEG 2, MPEG 3, and MPEG 4.

The NPU is a neural network (neural-network, NN) computing processor, and rapidly processes input information by referring to a biological neural network structure, for example, by referring to a transfer mode between human brain neurons, and can further continuously perform self-learning. Applications such as intelligent cognition of the electronic device 100 can be implemented by using the NPU, such as image recognition, facial recognition, speech recognition, and text understanding.

The external memory interface 120 may be configured to connect to an external storage card such as a micro SD card, to extend a storage capability of the electronic device 100. The external storage card communicates with the processor 110 by using the external memory interface 120, to implement a data storage function, for example, to store a file such as music or a video in the external storage card.

The internal memory 121 may be configured to store one or more computer programs, and the one or more computer programs include an instruction. The processor 110 may run the instruction stored in the internal memory 121, to enable the electronic device 100 to perform a method for intelligently recommending a contact provided in some embodiments of this application, various function applications, data processing, and the like. The internal memory 121 may include a program storage area and a data storage area. The program storage area may store an operating system. The program storage area may further store one or more application programs (such as Gallery and Contacts). The data storage area may store data (such as a photo and a contact) created during use of the electronic device 101. In addition, the internal memory 121 may include a high-speed random access memory, and may further include a non-volatile memory, such as one or more disk storage components, a flash component, or a universal flash storage (universal flash storage, UFS). In some other embodiments, the processor 110 runs the instruction stored in the internal memory 121 and/or an instruction stored in a memory disposed in the processor, to enable the electronic device 100 to perform a method for intelligently recommending a number provided in the embodiments of this application, various function applications, and data processing.

The electronic device 100 may implement an audio function such as music playing or recording by using the audio module 170, the loudspeaker 170A, the telephone receiver 170B, the microphone 170C, the headset interface 170D, the application processor, and the like.

The audio module 170 is configured to convert digital audio information into an analog audio signal and output the analog audio signal, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The loudspeaker 170A, also referred to as a "speaker", is configured to convert an audio electrical signal into a sound signal. The electronic device 100 may play music or answer a call in a handsfree mode by using the loudspeaker 170A.

The telephone receiver 170B, also referred to as an "earpiece", is configured to convert an audio electrical signal into a sound signal. When a call is answered or voice information is listened to by using the electronic device 100, the telephone receiver 170B may be put close to a human ear to listen to voice.

The microphone 170C, also referred to as a "microphone" or a "microphone", is configured to convert a sound signal into an electrical signal. When making a call or sending voice information, a user may make sound by approaching the mouth to the microphone 170C, to input a sound signal to the microphone 170C. One or more microphones 170C may be disposed in the electronic device 100. In some other embodiments, two microphones 170C may be disposed in the electronic device 100, and may further implement a noise reduction function in addition to collecting a sound signal. In some other embodiments, alternatively, three, four, or more microphones 170C may be disposed in the electronic device 100, to collect a sound signal, reduce noise, and further identify a sound source, and implement a directional recording function, and the like.

In this embodiment of this application, when the electronic device 100 runs a karaoke application, the microphone 170 C may be used to collect a cappella of the user, to be specific, pure human voice without music when the user sings a song. In addition, the audio module 170 may use a corresponding audio correction algorithm to correct the collected a cappella of the user.

For example, if relatively obvious or disordered breathing sound appears in a cappella of the user in a song A recorded by the user, the audio module 170 may perform weakening processing on breathing sound at a corresponding location in the a cappella of the user, to improve listening quality of the song.

For another example, if vibrato appears in a cappella of an original singer of the song A, the audio module 170 may detect whether vibrato is also used at a corresponding location in the a cappella of the user of the song A recorded by the user. If a vibrato effect used by the user is not good, the audio module 170 may correct the vibrato at the corresponding location in the a cappella of the user, to improve listening quality of the song.

For another example, the audio module 170 may identify, by comparing the a cappella of the user of the song A with the a cappella of the original singer, a location at which "out of tune" occurs in the a cappella of the user, and further, the audio module 170 may perform corresponding tone-rising or tone-falling on the location at which "out of tune" occurs in the a cappella of the user, thereby correcting an intonation problem in the a cappella of the user. A specific method for correcting, by the electronic device 100, the a cappella of the user that is collected by the microphone 170 C is described in detail in a subsequent embodiment. Therefore, details are not described herein.

It may be learned that, in this embodiment of this application, in addition to calibrating intonation for the song recorded by the user, the electronic device may further resolve a singing skill problem such as breathing or vibrato in the song recorded by the user. In this way, a common user who has not undergone professional vocal music training can also record singing voice with relatively good listening quality, thereby improving a recording effect and use experience when the user uses the karaoke application.

The headset interface 170D is configured to connect to a wired headset. The headset interface 170D may be a USB interface 130, or may be an open mobile terminal platform (open mobile terminal platform, OMTP) standard interface of 3.5 mm or a standard interface of a cellular telecommunications industry association of the USA (cellular telecommunications industry association of the USA, CTIA).

The sensor 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The button 190 includes a power button, a volume button, and the like. The button 190 may be a mechanical button, or may be a touch button. The electronic device 100 may receive button input, and generate button signal input related to user setting and function control of the electronic device 100.

The motor 191 may generate a vibration prompt. The motor 191 may be used for an incoming call vibration prompt, and may also be used for touch vibration feedback. For example, touch operations performed on different applications (such as photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. Customization of the touch vibration feedback effect may be further supported.

The indicator 192 may be an indicator light that may be used to indicate a charging status and a power change, or may be used to indicate a message, a missed call, a notification, and the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at a same time. The plurality of cards may be of a same type or different types. The SIM card interface 195 may also be compatible with different types of SIM cards. The SIM card interface 195 may also be compatible with an external storage card. The electronic device 100 interacts with the network by using the SIM card, to implement a call function, a data communication function, and the like. In some embodiments, the electronic device 100 uses an eSIM, namely, an embedded SIM card. The eSIM card may be embedded in the electronic device 100 and cannot be separated from the electronic device 100.

A software system of the electronic device 100 may use a hierarchical architecture, an event-driven architecture, a microcore architecture, a microservice architecture, or a cloud architecture. In this embodiment of this application, an Android system of the hierarchical architecture is used as an example to illustrate the software structure of the electronic device 100.

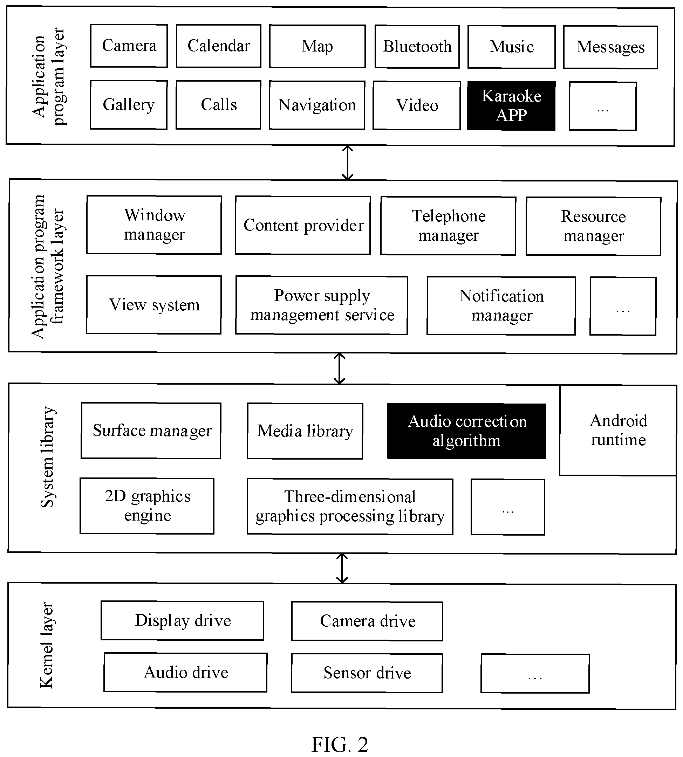

FIG. 2 is a block diagram of a software structure of an electronic device 100 according to an embodiment of this application.

In a hierarchical architecture, software is divided into several layers, and each layer has a clear role and task. The layers communicate with each other by using a software interface. In some embodiments, an Android system is divided into four layers, namely, an application program layer, an application program framework layer, an Android runtime (Android runtime) and a system library, and a kernel layer from top to bottom.

The application program layer may include a series of application packages.

As shown in FIG. 2, the application package may include APPs (application, application) such as Calls, Contacts, Camera, Gallery, Calendar, Map, Navigation, Bluetooth, Music, Video, and Messages.

In this embodiment of this application, a karaoke application such as a "Changba" APP or a "WeSing" APP may be further installed at the application program layer. A user may record a song by using the karaoke application, and integrates singing voice of the user into accompaniment provided by the karaoke application.

The application program framework layer provides an application programming interface (application programming interface, API) and a programming framework for an application program at the application program layer. The application program framework layer includes some predefined functions.

As shown in FIG. 2, the application program framework layer may include a window manager, a content provider, a view system, a resource manager, a notification manager, and the like.

The window manager is configured to manage a window program. The window manager may obtain a display size, and determine whether there is a status bar, lock screen, screen capturing, or the like. The content provider is configured to: store and obtain data and make the data accessible to the application program. The data may include a video, an image, audio, calls that are made and answered, a browsing history and a bookmark, an address book, and the like. The view system includes a visual control such as a control for displaying text and a control for displaying a picture. The view system may be configured to construct the application program. A display interface may include one or more views. For example, a display interface including a short messaging service message notification icon may include a view for displaying text and a view for displaying a picture. The resource manager provides various resources such as a localized character string, an icon, a picture, a layout file, and a video file for the application program. The notification manager enables the application program to display notification information in a status bar, and may be configured to convey a type notification message. The type notification message may automatically disappear after a short pause, and user interaction is not required. For example, the notification manager is configured to notify completion of downloading, a message prompt, and the like. The notification manager may be alternatively a notification that appears in a top status bar of a system in a form of a graph or scroll bar text, for example, a notification of an application program running in the background, or may be a notification that appears on a screen in a form of a dialog window. For example, text information is prompted in the status bar, a prompt tone is made, the electronic device vibrates, or an indicator light blinks.

The system library may include a plurality of functional modules such as a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of application programs. The media library supports playback and recording of a plurality of commonly used audio and video formats, a static image file, and the like. The media library may support a plurality of audio and video encoding formats, such as MPEG4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

In this embodiment of this application, still as shown in FIG. 2, a related audio correction algorithm provided in this embodiment of this application may be set in the system library in a form of a dynamic algorithm library (dynamic link library, DLL). For example, the dynamic algorithm library of the audio correction algorithm may be stored in a system/lib directory. When a karaoke application runs at the application program layer, the karaoke application may invoke the dynamic algorithm library of the audio correction algorithm to correct a problem such as intonation, vibrato, or breathing sound in a cappella of the user, thereby implementing an audio correction function.

The Android runtime includes a kernel library and a virtual machine. The Android runtime is responsible for scheduling and management of the Android system.

The kernel library includes two parts: a function that needs to be invoked by java language and a kernel library of Android.

The application program layer and the application program framework layer run in the virtual machine. The virtual machine executes java files at the application program layer and the application program framework layer as binary files. The virtual machine is configured to perform functions such as object life cycle management, stack management, thread management, security and exception management, and garbage collection.

The kernel layer is a layer between hardware and software. The kernel layer includes at least a display drive, a camera drive, an audio drive, a sensor drive, and the like. This is not limited in this embodiment of this application.

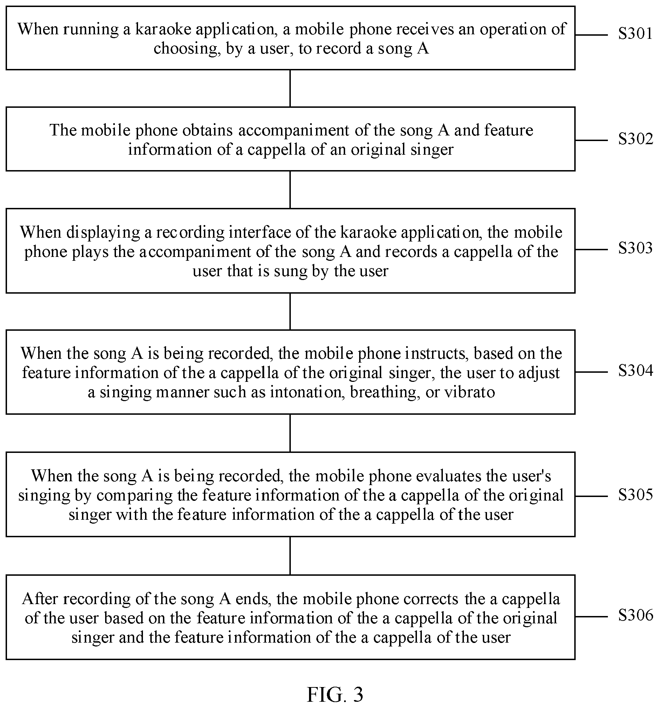

A mobile phone is used as an example of the electronic device below to describe in detail the song recording method and the audio correction method provided in the embodiments of this application with reference to the accompanying drawings. As shown in FIG. 3, the method includes the following steps S301 to S306.

S301. When running a karaoke application, a mobile phone receives an operation of choosing, by a user, to record a song A.

The karaoke application is application software that can provide functions such as song requesting, song recording, and audio correction for the user. For example, the karaoke application may be a "WeSing" APP or a "Changba" APP. This is not limited in this embodiment of this application.

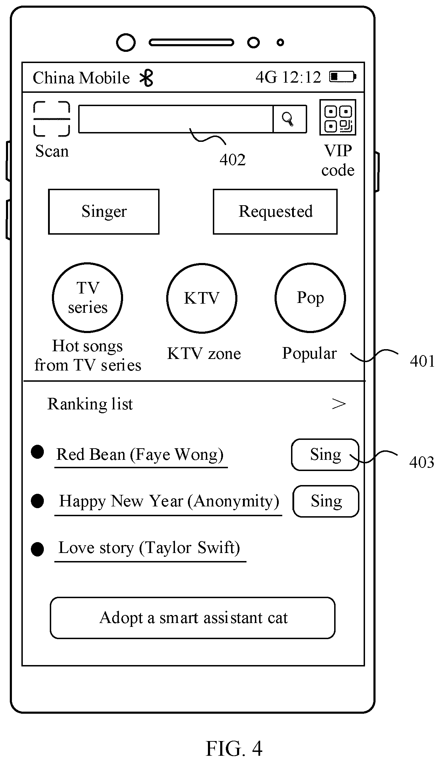

If the mobile phone detects an operation of opening the karaoke application by the user, as shown in FIG. 4, the mobile phone may start to run the karaoke application, and display a first interface 401 of the karaoke application. The user may search the first interface 401 for a song that the user likes, and record the song. Alternatively, the user may manually perform searching in a search bar 402, and select a song that needs to be recorded. Certainly, the user may alternatively select, from another screen of the karaoke application, a song that needs to be recorded this time. This is not limited in this embodiment of this application.

Still as shown in FIG. 4, if the user wants to record a song "Red Bean", the user may tap a recording button 403 for the song "Red Bean" on the first interface 401. In this case, the mobile phone may receive an operation of choosing, by the user, to record the song "Red Bean". In response to the operation of choosing, by the user, to record the song "Red Bean", the mobile phone may continue to perform the following steps S302 to S306 to complete processes such as recording and audio correction of the song.

S302. The mobile phone obtains accompaniment of the song A and feature information of a cappella of an original singer.

Recording the song "Red Bean" by the user is still used as an example. After detecting that the user taps the recording button 403 for the song "Red Bean", the mobile phone may download accompaniment of the song "Red Bean" from a server. Certainly, if the mobile phone stores the accompaniment of the song "Red Bean" this time, the mobile phone may obtain the accompaniment from a local memory. Generally, a part of a song except human voice may be referred to as accompaniment, and some accompaniment may further include harmony, background sound, and the like.

In this embodiment of this application, after detecting that the user taps the recording button 403 for the song "Red Bean", the mobile phone may further download the feature information of the a cappella of the original singer of the song "Red Bean" from the server. The feature information may reflect a singing feature of the original singer (for example, Faye Wong) when singing the song "Red Bean". For example, the feature information may include one or more of fundamental frequency information, a breathing location, and a vibrato feature of the a cappella of the original singer. The vibrato feature may include one or more of a vibrato location, fundamental frequency stability information of vibrato, a vibrato frequency, and a vibrato amplitude.

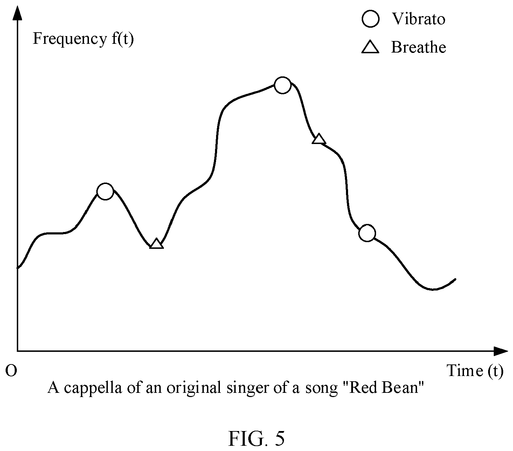

The fundamental frequency information may reflect a basic tone of sound. As shown in FIG. 5, the server may extract a fundamental frequency-time variation curve f(t) frame by frame from the a cappella of the original singer of the song "Red Bean" in advance, and the variation curve f(t) is fundamental frequency information of the song "Red Bean". Still as shown in FIG. 5, the server may further detect a location at which the original singer breathes in the a cappella of the original singer, and use, as one piece of feature information, a moment at which the original singer breathes. Similarly, still as shown in FIG. 5, the server may further detect a location at which vibrato appears in the a cappella of the original singer, and use, as one piece of feature information, a moment at which the vibrato appears.

Generally, the vibrato is manifested as periodic pitch variations. Three time-varying features, namely, a vibration amplitude A(t), a vibration frequency Φ(t), and a stable trend term V(t) can be extracted from a fundamental frequency curve with a vibrato feature. For example, vibrato 1 appears at a third sentence in the a cappella of the original singer of the song "Red Bean". A fundamental frequency curve corresponding to the vibrato 1 is f3(t)=V(t)+A(t)cos(Φ(t)), where t falls within [8s, 10s]. V(t) is fundamental frequency stability information of the vibrato 1, Φ(t) is a vibrato frequency of the vibrato 1, and A(t) is a vibrato amplitude of the vibrato 1. The server may send fundamental frequency stability information, a vibrato frequency, and a vibrato amplitude of each vibrato in the song "Red Bean" to the mobile phone as feature information.

For example, each time a new song is added to a song library in the server, the server may extract corresponding feature information based on a cappella of an original singer of the new song, and store the extracted feature information in the server. Subsequently, if the user chooses to record a song in the mobile phone, the mobile phone may obtain accompaniment of the song from the server, and may further obtain, from the server, feature information of a cappella of an original singer corresponding to the song. The obtained feature information of the a cappella of the original singer may be used to guide the user to record the song, and may also be used as an audio correction basis to correct a song recorded by the user.

S303. When displaying a recording interface of the karaoke application, the mobile phone plays the accompaniment of the song A and records a cappella of the user that is sung by the user.

Recording the song "Red Bean" by the user is still used as an example. After the mobile phone obtains the accompaniment of the song "Red Bean", the mobile phone may start to play the accompaniment of the song "Red Bean". In addition, the mobile phone may enable a microphone to start to record a cappella of the user that is obtained after the user sings the song "Red Bean".

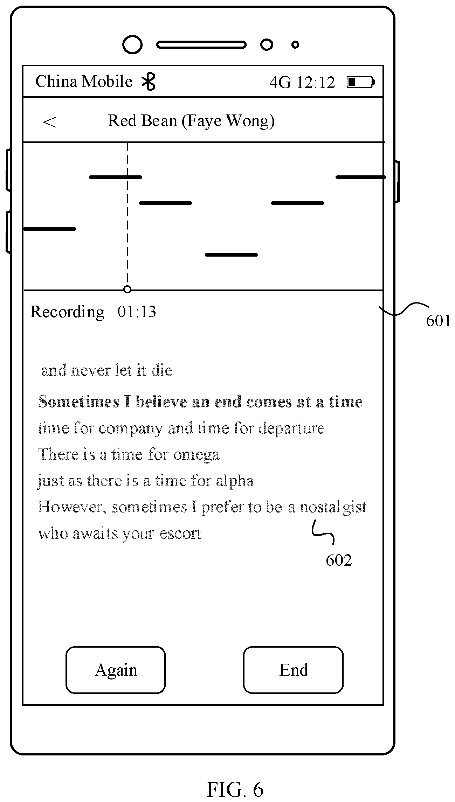

As shown in FIG. 6, in a process of recording the song "Red Bean", the mobile phone may display a recording interface 601 of the song "Red Bean". The recording interface 601 may display lyrics 602 of the song "Red Bean", and a location of lyrics being recorded may be marked in real time in the lyrics 602, so that the user can record the song based on a prompt in the lyrics 602.

S304. When the song A is being recorded, the mobile phone instructs, based on the feature information of the a cappella of the original singer, the user to adjust a singing manner such as intonation, breathing, or vibrato.

For example, when the user records the song by using the karaoke application, when displaying the lyrics 602, the mobile phone may guide, based on the feature information obtained in step S302, the user to sing the song, for example, guide the singing manner of the user such as intonation, breathing, or vibrato.

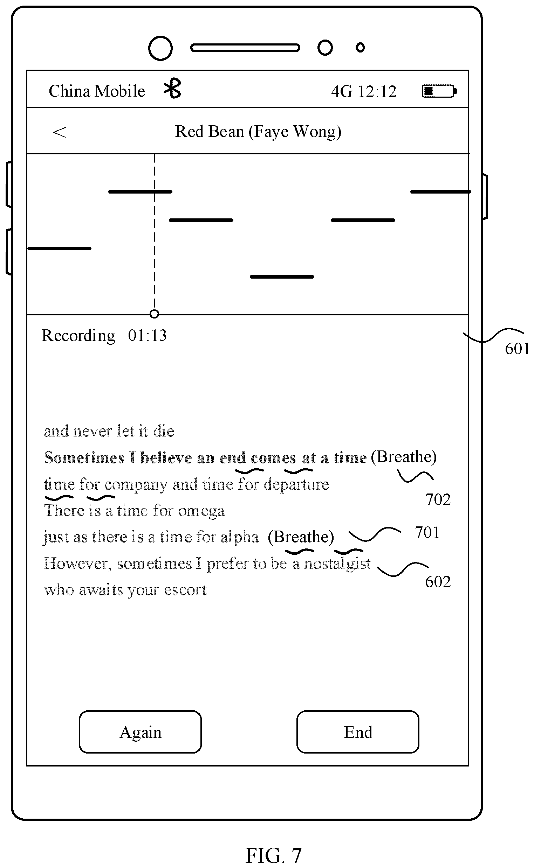

Recording the song "Red Bean" by the user is still used as an example. The feature information that is of the a cappella of the user and that is obtained by the mobile phone includes information such as a breathing location and a vibrato location. In this case, as shown in FIG. 7, when displaying the lyrics 602 of the song "Red Bean" in real time, the mobile phone may mark a breathing location 701 (that is, a breathing prompt) at a corresponding location of the lyrics 602 based on the breathing location recorded in the feature information of the a cappella of the original singer. In this way, when recording the song "Red Bean", the user may breathe based on the breathing location 701 prompted in the lyrics 602, to help the user control breath variation during singing, thereby reducing relatively obvious and disordered breathing sound in the recorded song, to improve listening quality of the recorded song.

For another example, still as shown in FIG. 7, when displaying the lyrics 602 of the song "Red Bean" in real time, the mobile phone may further mark a vibrato location 702 (that is, a vibrato prompt) at a corresponding location of the lyrics 602 based on the vibrato location recorded in the feature information of the a cappella of the original singer. In this way, when recording the song "Red Bean", the user may sing with vibrato based on the vibrato location 702 prompted in the lyrics 602, to improve a sense of hierarchy of the song and a singing skill when the user is singing, thereby improving listening quality of the recorded song.

In some other embodiments, in addition to guiding, in the lyrics displayed in real time, the user to sing, the mobile phone may further set a singing tool on the recording interface. The mobile phone may guide, in the singing tool, the user to adjust the singing manner such as intonation, breathing, or vibrato.

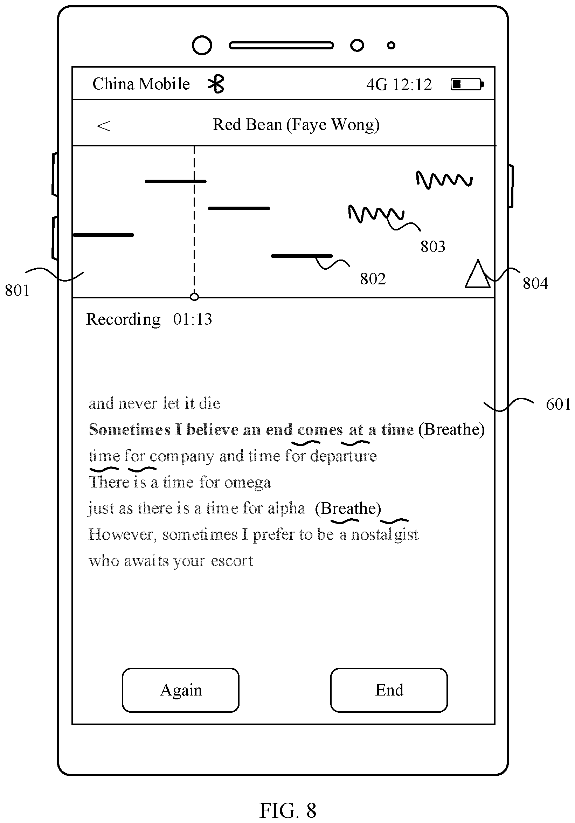

Recording the song "Red Bean" by the user is still used as an example. As shown in FIG. 8, when displaying the recording interface 601, the mobile phone may set a singing tool 801 on the recording interface 601. The singing tool 801 may display a note of each word in a sentence of lyrics currently being recorded. For example, the mobile phone may display a tone line 802 (that is, an intonation prompt) in the singing tool 801 in real time based on the fundamental frequency information of the a cappella of the original singer. A higher tone of a current note leads to a higher location of the tone line 802. For another example, the mobile phone may display a vibrato note 803 (that is, a vibrato prompt) in the singing tool 801 based on the vibrato location in the a cappella of the original singer. The vibrato note 803 may be represented by a break line or a line segment in a specific color. A location at which the vibrato note 803 appears is the same as a location at which vibrato appears in the a cappella of the original singer. For another example, if breathing sound appears in a cappella of the original singer corresponding to the current sentence of lyrics, the mobile phone may display a breathing note 804 (that is, a breathing prompt) in the singing tool 801 based on a breathing location in the a cappella of the original singer. The breathing note 804 may be represented by a graph of a specified shape such as a triangle or a circle. A location at which the breathing note 804 appears is the same as a location at which breathing sound appears in the a cappella of the original singer.

In this way, when recording a song, the user may adjust intonation of human voice based on a tone line displayed in the singing tool 801 in real time, or may sing with vibrato at a corresponding location based on the vibrato note displayed in the singing tool 801 in real time, or may breathe at a corresponding location based on the breathing note displayed in the singing tool 801 in real time, to guide a singing skill such as intonation, vibrato, and breathing during the user's singing in a recording process, thereby improving recording quality of the song.

It may be understood that, when the user records the song, in addition to guiding, in the lyrics and the singing tool that are displayed on the recording interface, the user to sing, when the user is recording the song, a person skilled in the art may further guide, based on actual experience or an actual application scenario by using the feature information of the a cappella of the original singer, the user to sing the song better. This is not limited in this embodiment of this application.

S305. When the song A is being recorded, the mobile phone evaluates the user's singing by comparing the feature information of the a cappella of the original singer with the feature information of the a cappella of the user.

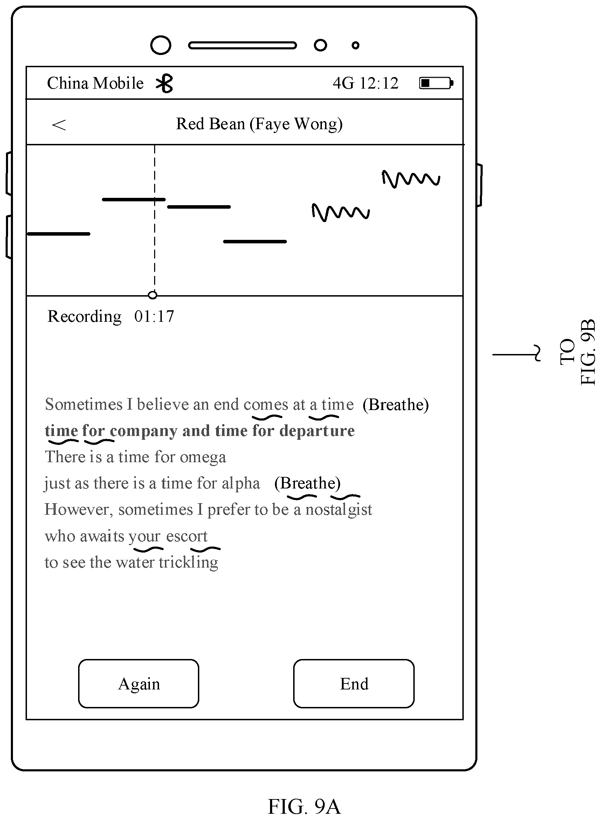

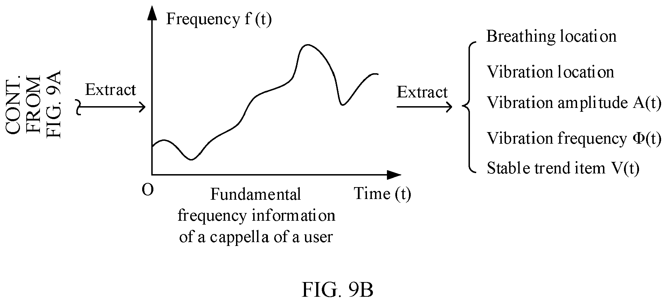

Recording the song "Red Bean" by the user is still used as an example. When the song "Red Bean" is being recorded, the mobile phone may further evaluate current singing of the user in real time based on the feature information of the a cappella of the original singer. For example, the mobile phone may evaluate the user's singing by using a word, a phrase, or a sentence in the lyrics as a granularity. As shown in FIG. 9A and FIG. 9B, after the mobile phone collects the a cappella of the user that is obtained after the user sings "I believe an end comes at a time", the mobile phone may extract feature information of the a cappella of the user of this sentence. Similar to the feature information of the a cappella of the original singer, the mobile phone may first extract fundamental frequency information of the a cappella of the user of this sentence, and detect one or more pieces of feature information such as a breathing location of the user, a vibrato location, fundamental frequency stability information of vibrato, a vibrato frequency, and a vibrato amplitude based on the fundamental frequency information of the a cappella of the user.

In this case, by comparing feature information 1 of the original singer when singing "I believe an end comes at a time" with feature information 2 of the user when singing "I believe an end comes at a time", the mobile phone may determine an evaluation result of the singing skill such as intonation, vibrato, and breathing of the user when singing this sentence.

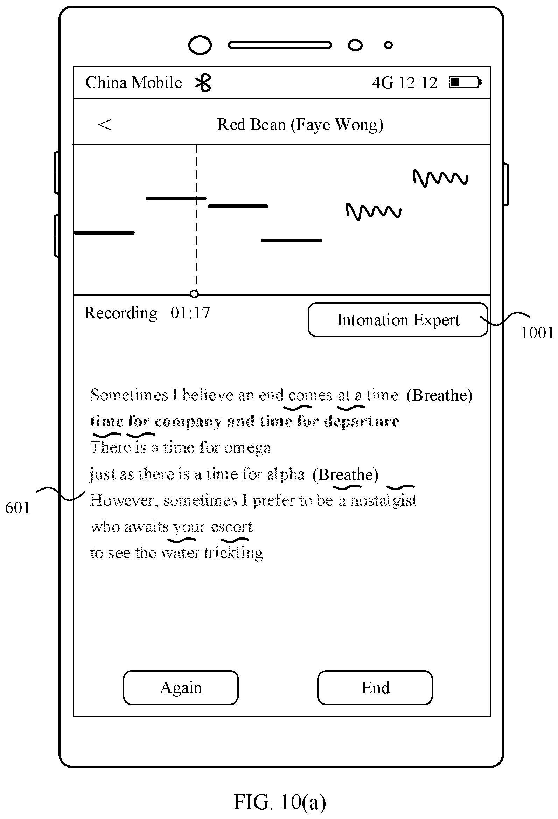

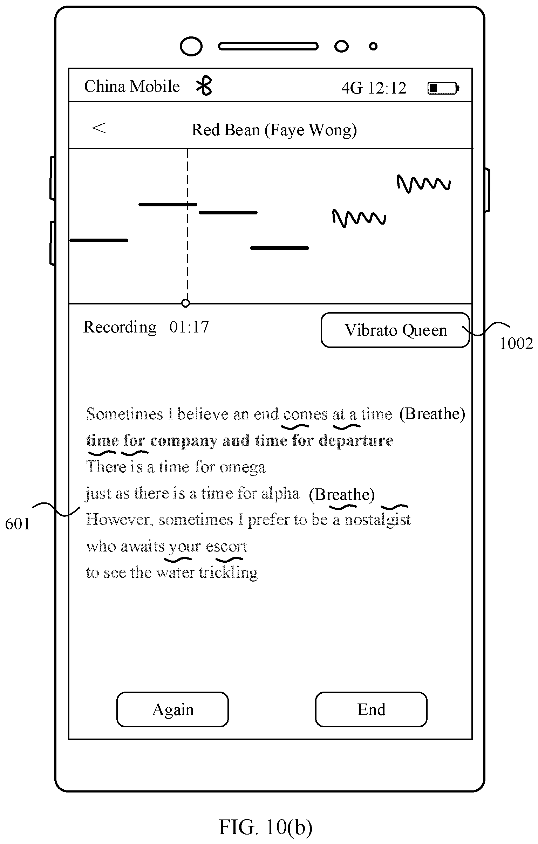

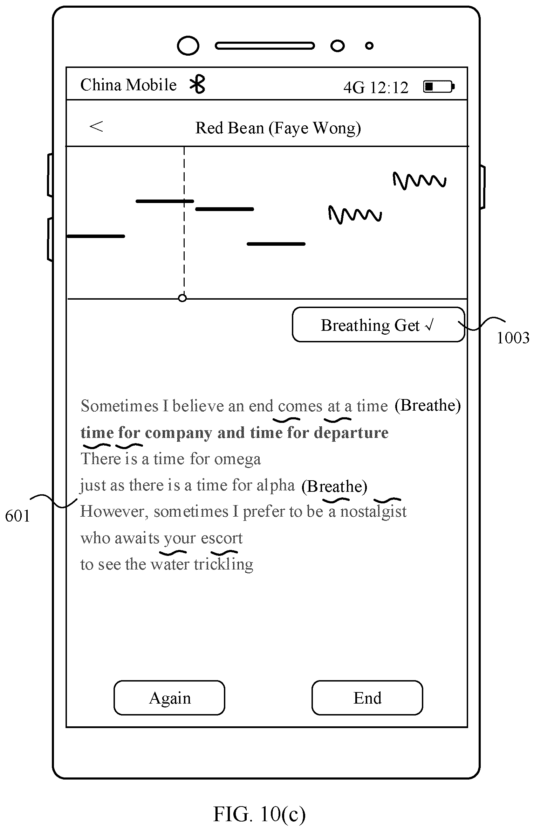

For example, if a difference between the fundamental frequency information of the a cappella of the user and the fundamental frequency information of the a cappella of the original singer is less than a threshold, it indicates that intonation of the user when singing this sentence matches that of the original singer. As shown in FIG. 10(a), the mobile phone may display a prompt 1001 of "Intonation Expert" on the recording interface 601, to notify the user that the user is correct in intonation when singing this sentence. If the vibrato location in the a cappella of the user is the same as the vibrato location in the a cappella of the original singer, and a difference between a vibrato feature (to be specific, a vibrato frequency, a vibrato amplitude, and fundamental frequency stability information) of the vibrato in the a cappella of the user and a corresponding vibrato feature in the a cappella of the original singer is less than a threshold, it indicates that vibrato made by the user when singing this sentence matches that of the original singer. As shown in FIG. 10(b), the mobile phone may display a prompt 1002 of "Vibrato Queen" on the recording interface 601. If a location of breathing sound in the a cappella of the user is the same as a location of breathing sound in the a cappella of the original singer, it indicates that breath adjustment of the user when singing this sentence matches that of the original singer. As shown in FIG. 10(c), the mobile phone may display a prompt 1003 of "Breathing Get" on the recording interface 601.

In addition to notifying the user of a current evaluation result in real time by using text, the mobile phone may display the current evaluation result to the user in real time by using color, vibration, a special effect, or the like.

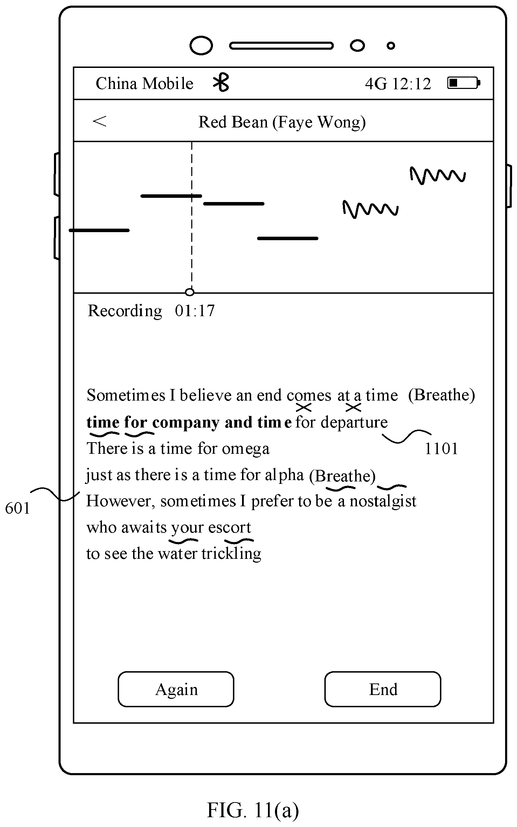

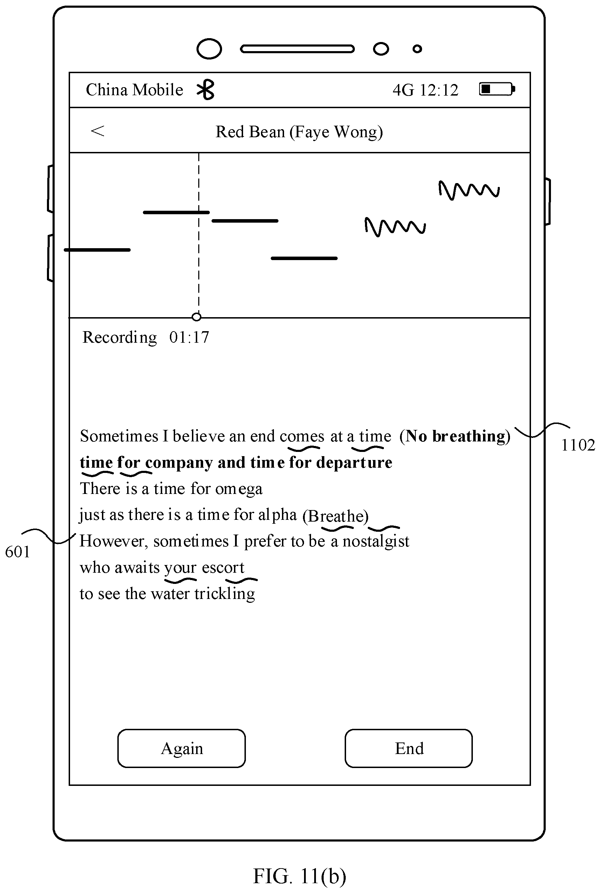

For example, as shown in FIG. 11(a), if vibrato used by the user when singing lyrics "I believe an end comes at a time" is inconsistent with vibrato used when the original singer sings this sentence, when displaying the lyric "end" 1101 corresponding to the vibrato, the mobile phone may mark the "end" 1101 as a color different from other lyrics, use a different font, or the like. For another example, as shown in FIG. 11(b), if a breathing location of the user when singing this sentence is inconsistent with a breathing location of the original singer when singing this sentence, the mobile phone may mark a breathing error sign 1102 when displaying lyrics corresponding to the breathing location.

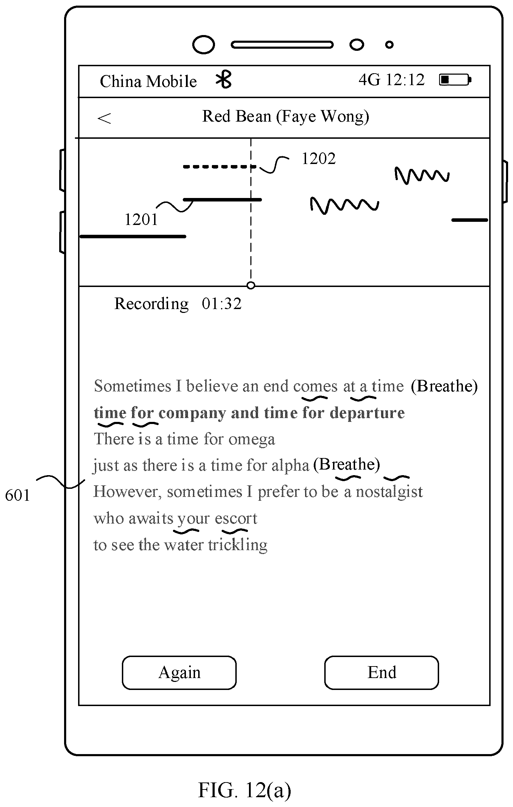

Alternatively, the mobile phone may further display, to the user and in the singing tool 801 on the recording interface 601, the evaluation result determined by the mobile phone. For example, as shown in FIG. 12(a), when the user sings the word "comes", the mobile phone may not only display, in the singing tool 801 in real time, a tone line 1201 obtained when the original singer sings "comes", but may also display, at a same time, a tone line 1202 obtained when the user sings the word "comes" this time. If a fundamental frequency used when the user sings the word "comes" is lower than a fundamental frequency used when the original singer sings the word "comes", it indicates that a tone of the user when singing "comes" is lower than a tone of the original singer when singing "comes", and the tone line 1202 displayed by the mobile phone is lower than the tone line 1201. Correspondingly, if it is detected that the tone of the user when singing the word "comes" is higher than the tone of the original singer when singing the word "comes", the tone line 1202 displayed by the mobile phone may be higher than the tone line 1201. In addition, if it is detected that the tone of the user when singing the word "comes" is the same as the tone of the original singer when singing the word "comes", the tone line 1202 in the singing tool 801 coincides with the tone line 1201. In this way, the user may learn an intonation situation of current singing from the singing tool 801 during real-time singing.

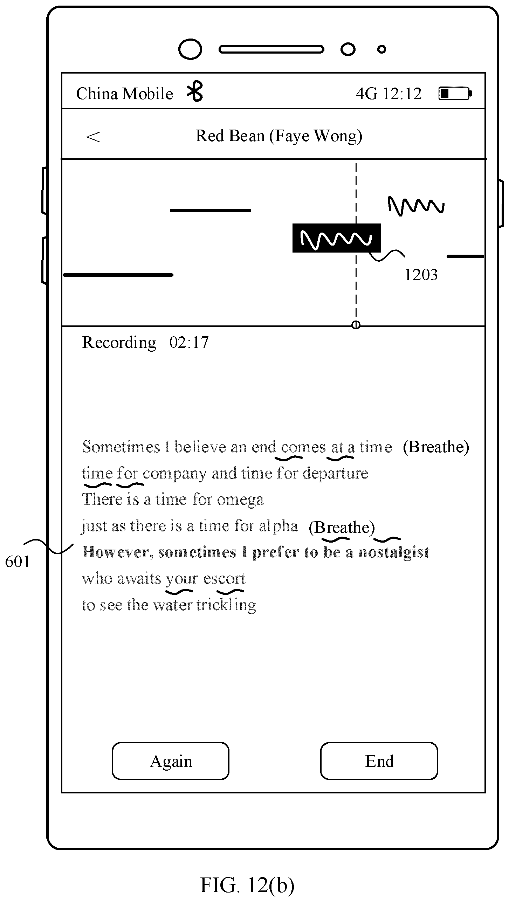

For another example, as shown in FIG. 12(b), the mobile phone may display, in the singing tool 801, a vibrato note 1203 obtained when the original singer sings the vibrato 1. After detecting the a cappella of the user when the user sings the vibrato 1, the mobile phone may determine, through comparison, whether the vibrato location, the vibrato amplitude A(t), the vibrato frequency Φ(t), and the stable trend item V(t) obtained when the user sings the vibrato 1 match the vibrato location, the vibrato amplitude A(t), the vibrato frequency Φ(t), and the stable trend item V(t) obtained when the original singer sings the vibrato 1. If the vibrato location, the vibrato amplitude A(t), the vibrato frequency Φ(t), and the stable trend item V(t) obtained when the user sings the vibrato 1 do not match the vibrato location, the vibrato amplitude A(t), the vibrato frequency Φ(t), and the stable trend item V(t) obtained when the original singer sings the vibrato 1, it indicates that a preset vibrato effect is not achieved when the user sings the vibrato 1 this time, and the mobile phone may display the vibrato note 1203 as a display effect such as a dotted line. Correspondingly, if the vibrato location, the vibrato amplitude A(t), the vibrato frequency Φ(t), and the stable trend item V(t) obtained when the user sings the vibrato 1 match the vibrato location, the vibrato amplitude A(t), the vibrato frequency Φ(t), and the stable trend item V(t) obtained when the original singer sings the vibrato 1, it indicates that the preset vibrato effect is achieved when the user sings the vibrato 1 this time, and as shown in FIG. 12(b), the mobile phone may bold or highlight the vibrato note 1203, so that the user can learn a current vibrato singing effect from the singing tool 801 in a real-time singing process.

It may be understood that, a person skilled in the art may further evaluate, based on actual experience or an actual application scenario and based on the feature information of the a cappella of the original singer, the a cappella of the user that is sung by the user in real time when recording the song, and display an evaluation result for a breathing skill, a vibrato skill, or intonation to the user, for example, the mobile phone may score the a cappella of the user based on the feature information of the a cappella of the original singer, and display a scoring result to the user. This is not limited in this embodiment of this application.

It can be learned that, in this embodiment of this application, in a song recording process of the user, one or more singing skills of the user such as intonation, vibrato, or breathing may be evaluated in real time based on the feature information of the a cappella of the original singer. Compared with evaluating a singing level of the user only based on intonation, in this embodiment of this application, factors such as breathing and vibrato of the user are also considered during evaluation of the user's singing, and therefore, the obtained evaluation result is more accurate, abundant, and objective. In addition, the mobile phone may feed back the evaluation result of the user's singing to the user in real time in the recording process, so that the user learns a current singing effect of the user in time, and the user can adjust a singing manner in time in a subsequent recording process.

S306. After recording of the song A ends, the mobile phone corrects the a cappella of the user based on the feature information of the a cappella of the original singer and the feature information of the a cappella of the user.

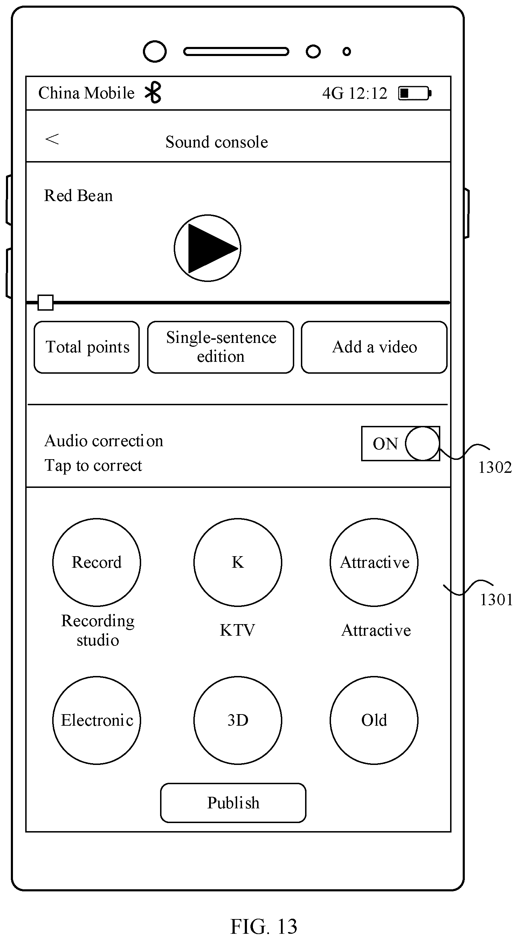

When the mobile phone finishes playing the accompaniment of the song A or detects an operation to end recording that is input by the user, the mobile phone may disable the microphone to stop collecting the a cappella made by the user. In addition, after the recording of the song A ends, as shown in FIG. 13, the mobile phone may display an audio correction interface 1301 of the karaoke application. The audio correction interface 1301 may include an audio correction switch 1302. If it is detected that the user turns on the audio correction switch 1302, the mobile phone may correct, based on the feature information of the a cappella of the original singer of the song A, a singing problem (for example, one or more singing problems such as intonation, vibrato, and breathing sound) that appears in the a cappella of the user and that is collected when the user records the song A this time.

For example, recording the song "Red Bean" by the user is still used as an example. After the user records the song "Red Bean" on the recording interface, the mobile phone may display the audio correction interface 1301 shown in FIG. 13. If it is detected that the user turns on the audio correction switch 1302 on the audio correction interface 1301, the mobile phone may correct, based on the feature information of the a cappella of the original singer, intonation, breathing sound, and vibrato in the a cappella of the user that is collected this time.

For example, the mobile phone may compare the fundamental frequency information of the a cappella of the original singer with the fundamental frequency information of the song "Red Bean" recorded by the user this time, to correct an intonation problem that appears in the a cappella of the user this time. For example, if a tone of a tenth second to a twentieth second in the a cappella of the user is lower than a tone of a tenth second to a twentieth second in the a cappella of the original singer, the mobile phone may perform tone-rising processing on the tone of this part in the a cappella of the user, so that the tone of this part in the a cappella of the user is the same as or close to the tone in the a cappella of the original singer. For example, if a tone of a first minute and twelfth second to a first minute and twenty-seventh second in the a cappella of the user is higher than a tone of a first minute and twelfth second to a first minute and twenty-seventh second in the a cappella of the original singer, the mobile phone may perform tone-falling processing on the tone of this part in the a cappella of the user, so that the tone of this part in the a cappella of the user is the same as or close to the tone in the a cappella of the original singer.

For another example, the mobile phone may extract a location of the breathing sound from the a cappella of the user of the song "Red Bean" recorded by the user this time. For example, the mobile phone may detect, by using a preset breathing detection model, that breathing sound appears at both a fourteenth second and a seventy-eighth second of the a cappella of the user. Further, the mobile phone may reduce energy and a frequency response of the a cappella of the user at the fourteenth second and the seventy-eighth second, thereby weakening the breathing sound that appears at the fourteenth second and the seventy-eighth second, to improve listening quality of the recorded song.

For another example, the mobile phone may compare the vibrato feature of the a cappella of the original singer with the vibrato feature of the song "Red Bean" recorded by the user this time, to correct vibrato with a poor vibrato effect in the a cappella of the user this time. For example, the mobile phone may detect, by using a preset vibrato detection model, a location at which vibrato appears in the a cappella of the user. For example, vibrato 1 is detected at a fifteenth second in the a cappella of the user, and if a vibration amplitude A1(t), a vibration frequency Φ1(t), and a stable trend term V1(t) of the vibrato 1 match a vibration amplitude A2(t), a vibration frequency Φ2(t), and a stable trend term V2(t) of vibrato 2 at a fifteenth second in the a cappella of the original singer, it indicates that an effect of the vibrato 1 sung by the user is basically the same as that of the original singer, and the mobile phone does not need to correct the vibrato 1. Correspondingly, if the vibration amplitude A1(t), the vibration frequency Φ1(t), and the stable trend term V1(t) of the vibrato 1 do not match the vibration amplitude A2(t), the vibration frequency Φ2(t), and the stable trend term V2(t) of the vibrato 2 at the fifteenth second in the a cappella of the original singer, the mobile phone may synthesize new vibrato in the a cappella of the user at the fifteenth second by using the vibration amplitude A2(t), the vibration frequency Φ2(t), and the stable trend term V2(t) of the vibrato 2, to improve a vibrato sound effect that appears in the a cappella of the user.

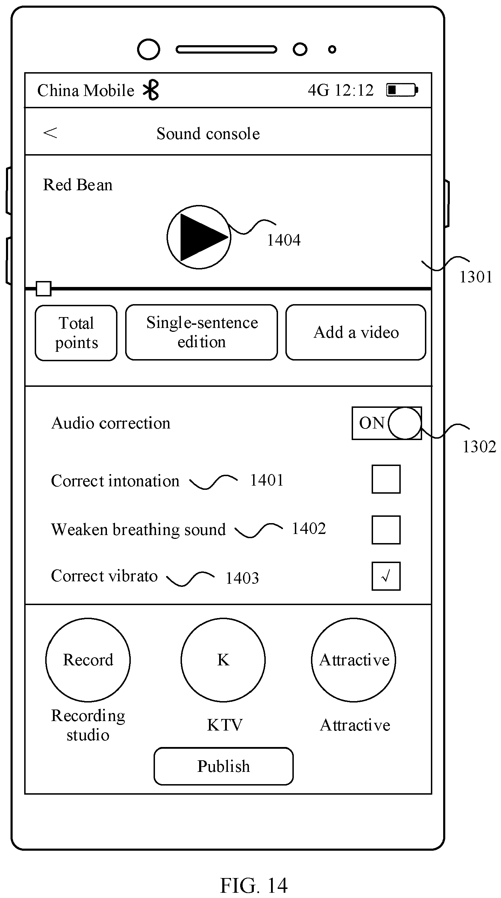

In some embodiments, as shown in FIG. 14, after detecting that the user turns on the audio correction switch 1302 on the audio correction interface 1301, the mobile phone may further display an audio correction option 1401 for correcting intonation, an audio correction option 1402 for correcting breathing sound, and an audio correction option 1403 for correcting vibrato. In this way, the user may manually choose, on the audio correction interface 1301, to correct an intonation problem, a breathing sound problem, or a vibrato problem in the a cappella of the user that is recorded this time.

In some other embodiments, after collecting the a cappella of the user of the song "Red Bean" recorded by the user this time, the mobile phone may further automatically correct problems such as intonation, breathing sound, and vibrato in the a cappella of the user, to improve listening quality of the song when the recorded song is played subsequently. For example, still as shown in FIG. 14, a play button 1404 is disposed on the audio correction interface 1301. If it is detected that the user taps the play button 1404, the mobile phone may automatically correct, based on the feature information of the a cappella of the original singer, the problems such as the intonation, the breathing sound, and the vibrato in the a cappella of the user, and integrate the corrected a cappella of the user into the accompaniment of the song "Red Bean" for playing.

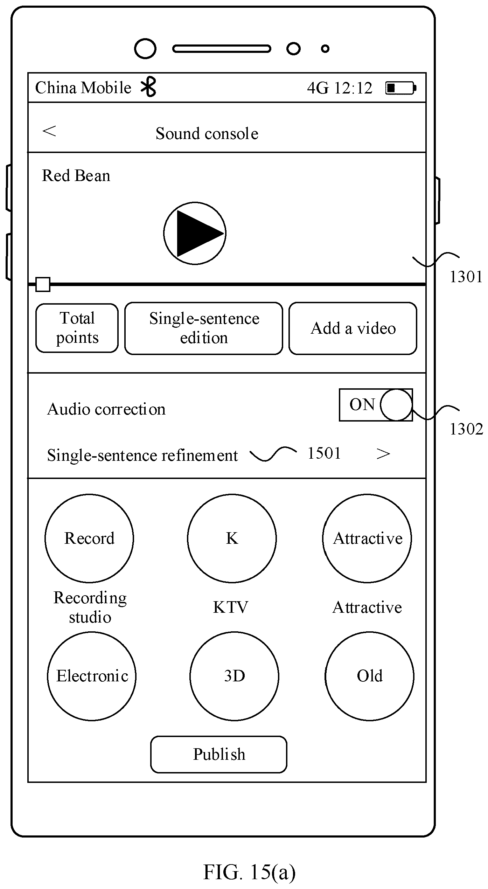

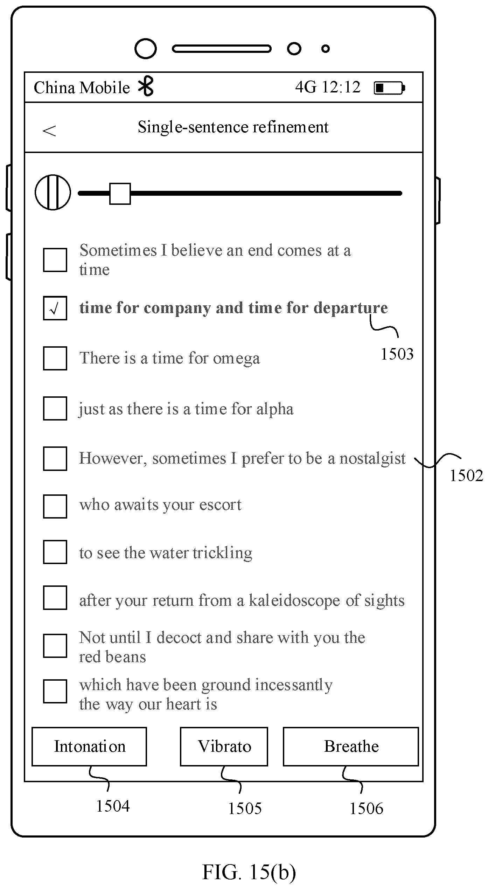

In some embodiments, as shown in FIG. 15(a), a single-sentence refinement option 1501 may be further set on the audio correction interface 1301 of the karaoke application. If it is detected that the user taps the option 1501, as shown in FIG. 15(b), the mobile phone may display a refinement interface 1502. On the refinement interface 1502, the mobile phone may display each sentence of lyrics sung by the user in the song "Red Bean", and use each sentence of the lyrics as an option for the user to select. For example, the user selects lyrics 1503 "I believe an end comes at a time". After the user selects the lyrics 1503, the mobile phone may play a recorded part of the song corresponding to the lyrics 1503. An intonation button 1504, a vibrato button 1505, and a breathing button 1506 are further set on the audio correction interface 1301. The user may manually choose, on the refinement interface 1502, whether to correct one or more singing problems such as intonation, vibrato, or breathing sound that appear in the a cappella of the user and that correspond to the lyrics 1503. If the user taps the vibrato button 1525 and the intonation button 1504 after selecting the lyrics 1503, the mobile phone may correct the intonation problem and the vibrato problem in the a cappella of the user corresponding to the lyrics 1503, and integrate the corrected a cappella of the user into the corresponding accompaniment for playing. In this way, the user may correct, sentence by sentence, the singing problem that appears in the a cappella of the user recorded this time, and the user may compare, sentence by sentence, recording effects achieved before and after the correction, to correct the song recorded by the user to a singing effect that the user is more satisfied with.

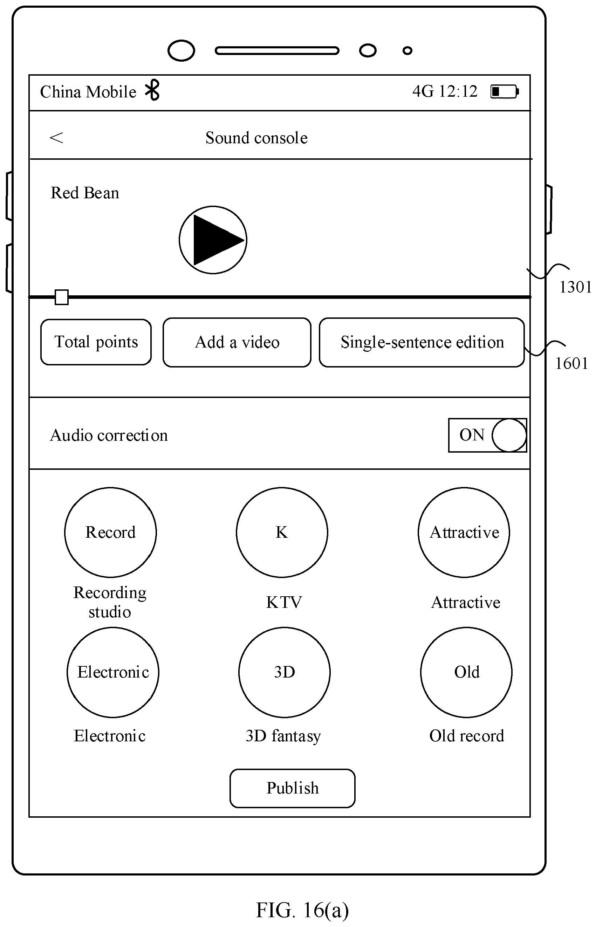

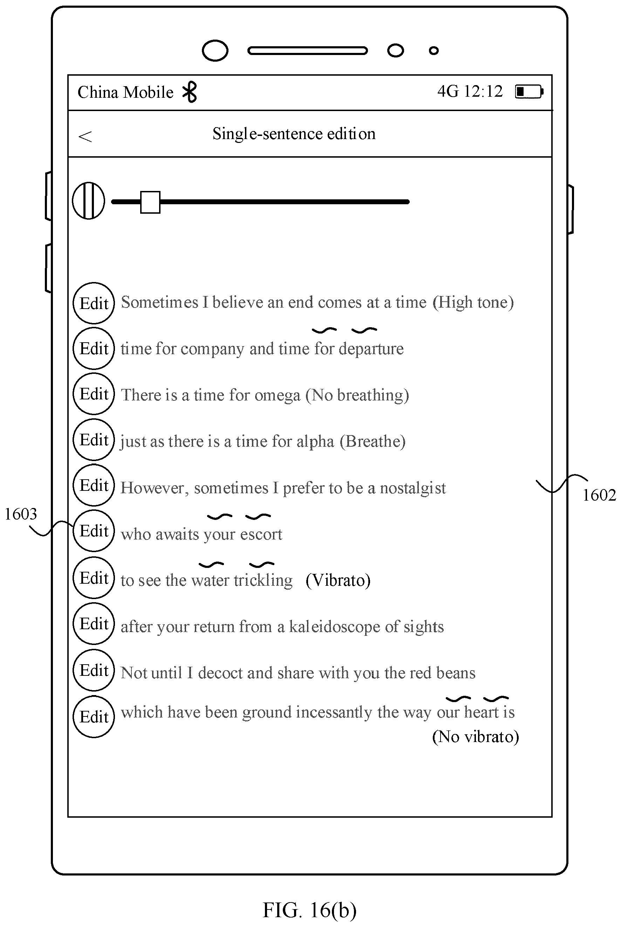

In some other embodiments, as shown in FIG. 16(a), a single-sentence edition option 1601 may be further set on the audio correction interface 1301 of the karaoke application. If it is detected that the user taps the option 1601, as shown in FIG. 16(b), the mobile phone may display an edition interface 1602. On the edition interface 1602, the mobile phone may display each sentence of lyrics sung by the user in the song "Red Bean". In addition, when displaying each sentence of the lyrics, the mobile phone may further prompt, at a corresponding location of the lyrics, a singing problem that appears when the user sings the sentence of the lyrics, for example, an inaccurate tone, relatively high breathing sound, unstable vibrato, or lack of vibrato. In this way, the user can intuitively see a specific problem that appears when the user sings each sentence of the lyrics.

In addition, still as shown in FIG. 16(b), an edition button 1603 corresponding to each sentence of the lyrics may be further set on the edition interface 1602. If it is detected that the user taps the edition button 1603 corresponding to a specific sentence of the lyrics, the mobile phone may play accompaniment corresponding to the lyrics, and enable the microphone to collect a cappella of the user that is obtained after the user re-sings the lyrics. After the mobile phone collects the a cappella of the user that is obtained after the user re-sings the lyrics, the a cappella of the user corresponding to the recorded song "Red Bean" may be replaced with the a cappella of the user that is re-recorded this time. The mobile phone has notified, when the lyrics are displayed on the edition interface 1602, the user of a specific singing problem that appears when the user sings the lyrics. Therefore, when the user re-sings the lyrics, the user may adjust a singing manner in time to correct the singing problem that appears when the lyrics are recorded last time. In this way, singing quality and recording quality are improved.

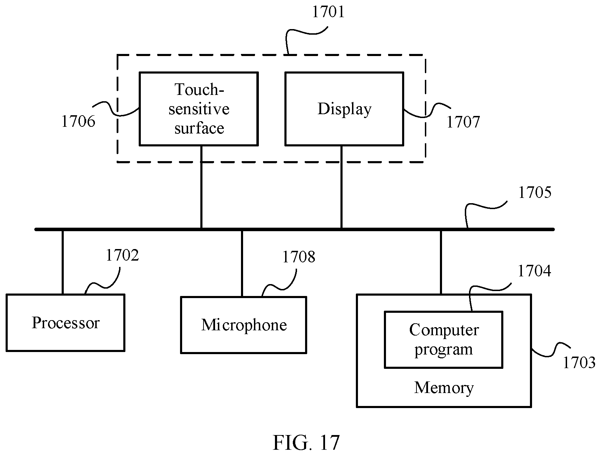

As shown in FIG. 17, an embodiment of this application discloses an electronic device, and the electronic device includes: a touchscreen 1701, where the touchscreen 1701 includes a touch-sensitive surface 1706 and a display 1707; one or more processors 1702; a memory 1703; one or more microphones 1708; and one or more computer programs 1704. The foregoing components may be connected by using one or more communications buses 1705. The one or more computer programs 1704 are stored in the memory 1703, and are configured to be executed by the one or more processors 1702. The one or more computer programs 1704 include an instruction, and the instruction may be used to perform the steps in the foregoing embodiments.

For example, the processor 1702 may be specifically the processor 110 shown in FIG. 1, the memory 1703 may be specifically the internal memory 121 and/or the external memory 120 shown in FIG. 1, the display 1707 may be specifically the display 194 shown in FIG. 1, the microphone 1708 may be specifically the microphone 170 C shown in FIG. 1, and the touch-sensitive surface 1706 may be specifically the touch sensor 180K in the sensor module 180 shown in FIG. 1. This is not limited in this embodiment of this application.

In some embodiments, this application further provides a graphical user interface (GUI), and the graphical user interface may be stored in an electronic device. For example, the electronic device may be the electronic device shown in FIG. 1 or FIG. 17.

For example, the graphical user interface includes a first GUI displayed on a touchscreen. As shown in FIG. 4, the first GUI may be an interface 401 of a karaoke application, and the first GUI includes a recording button 403 used to record a first song. In response to a touch event for the recording button, the electronic device may display a second GUI on the touchscreen. As shown in FIG. 7 or FIG. 8, the second GUI may be a recording interface 601 for recording the first song by a user. The second GUI may include guidance information for guiding the user to sing the first song, and the guidance information includes a breathing prompt and/or a vibrato prompt. For example, as shown in FIG. 7, lyrics 602 displayed on the recording interface 601 include a breathing prompt 701 and a vibrato prompt 702. For another example, as shown in FIG. 8, a singing tool 801 displayed on the recording interface 601 has an intonation prompt 802, a breathing prompt 804, and a vibrato prompt 803. The guidance information on the second GUI is generated by the electronic device based on feature information of a cappella of an original singer.

In some embodiments, the second GUI may further include an evaluation result of a breathing skill and/or a vibrato skill of the user during singing. For example, as shown in FIG. 10(a) to FIG. 10(c), the recording interface 601 includes an evaluation result 1001 for the breathing skill of the user, an evaluation result 1002 for the vibrato skill of the user, and an evaluation result 1003 for intonation of the user. For another example, as shown in FIG. 12(a) to FIG. 12(b), an evaluation result 1202 for the intonation of the user, an evaluation result 1203 for the vibrato skill of the user, and the like may be displayed in the singing tool on the recording interface 601. This is not limited in this embodiment of this application.

In some embodiments, after recording of the first song ends, the electronic device may display a third GUI on the touchscreen. As shown in FIG. 13 or FIG. 14, the third GUI may be an audio correction interface 1301 of the first song, and the third GUI includes an audio correction switch 1302. When the user turns on the audio correction switch 1302, the electronic device may correct a singing problem such as a breathing problem and/or a vibrato problem that appears in a cappella of the user.

The foregoing descriptions about implementations allow a person skilled in the art to clearly understand that, for ease of convenient and brief description, division of the foregoing functional modules is used as an example for illustration. In actual application, the foregoing functions may be allocated to different modules for implementation as required, that is, an inner structure of an apparatus is divided into different functional modules to implement all or some of the functions described above. For detailed working processes of the foregoing system, apparatus, and unit, refer to corresponding processes in the foregoing method embodiments, and details are not described herein again.

Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of the embodiments of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

The foregoing is merely specific implementations of the embodiments of this application, but a protection scope of the embodiments of this application is not limited thereto. Any variation or replacement within the technical scope disclosed in the embodiments of this application shall be within the protection scope of the embodiments of this application. Therefore, the protection scope of the embodiments of this application shall be subject to the protection scope of the claims.

## Claims

1. A song recording method, comprising:
displaying, by an electronic device, a first interface, wherein the first interface comprises a recording button used to record a first song;
in response to an operation of selecting the recording button by a user, obtaining, by the electronic device, accompaniment of the first song and feature information of a cappella of an original singer, wherein the feature information of the a cappella of the original singer may be used to reflect a singing feature of the original singer when the original singer sings the first song;
starting, by the electronic device, to play the accompaniment of the first song, and starting to record a cappella of the user that is sung by the user; and
in a process of recording the a cappella of the user, displaying, by the electronic device, guidance information on a second interface based on the feature information of the a cappella of the original singer, wherein the guidance information is used to guide one or more of breathing and vibrato during the user's singing.

2. The method according to claim 1, wherein the feature information of the a cappella of the original singer comprises a breathing location in the a cappella of the original singer, and the guidance information comprises a breathing prompt; and
the displaying, by the electronic device, guidance information on a second interface based on the feature information of the a cappella of the original singer comprises:
displaying, by the electronic device on the second interface based on the breathing location in the a cappella of the original singer, the breathing prompt corresponding to the breathing location in the a cappella of the original singer.

3. The method according to claim 2, wherein the second interface comprises lyrics of the first song; and
the displaying, by the electronic device on the second interface based on the breathing location in the a cappella of the original singer, the breathing prompt corresponding to the breathing location in the a cappella of the original singer comprises:
displaying, by the electronic device, the breathing prompt at a first location of the lyrics, wherein the first location is the same as the breathing location in the a cappella of the original singer.

4. The method according to claim 2, wherein the second interface comprises a singing tool, and the singing tool is configured to display a note of each word in lyrics being recorded; and
the displaying, by the electronic device on the second interface based on the breathing location in the a cappella of the original singer, the breathing prompt corresponding to the breathing location in the a cappella of the original singer comprises:
displaying, by the electronic device, the breathing prompt at a second location of the singing tool, wherein the second location is the same as the breathing location in the a cappella of the original singer.

5. The method according to claim 1, wherein the feature information of the a cappella of the original singer comprises a vibrato feature of the a cappella of the original singer, and the guidance information comprises a vibrato prompt; and
the displaying, by the electronic device, guidance information on a second interface based on the feature information of the a cappella of the original singer comprises:
displaying, by the electronic device on the second interface based on the vibrato feature of the a cappella of the original singer, a vibrato prompt corresponding to the vibrato feature of the a cappella of the original singer.

6. The method according to claim 5, wherein the vibrato feature comprises a vibrato location, and the second interface comprises lyrics of the first song; and
the displaying, by the electronic device on the second interface based on the vibrato feature of the a cappella of the original singer, a vibrato prompt corresponding to the vibrato feature of the a cappella of the original singer comprises:
displaying, by the electronic device, the vibrato prompt at a third location of the lyrics, wherein the third location is the same as the vibrato location in the a cappella of the original singer.

7. The method according to claim 5, wherein the vibrato feature comprises a vibrato location, the second interface comprises a singing tool, and the singing tool is configured to display a note of each word in lyrics being recorded; and
the displaying, by the electronic device on the second interface based on the vibrato feature of the a cappella of the original singer, a vibrato prompt corresponding to the vibrato feature of the a cappella of the original singer comprises:
displaying, by the electronic device, the vibrato prompt at a fourth location of the singing tool, wherein the fourth location is the same as the vibrato location in the a cappella of the original singer.

8. The method according to any one of claims 1 to 7, wherein in the process of recording the a cappella of the user, the method further comprises:
extracting, by the electronic device, feature information of the a cappella of the user from the a cappella of the user, wherein the feature information of the a cappella of the user is used to reflect a singing feature of the user when the user sings the first song; and
displaying, by the electronic device, an evaluation result on the second interface by comparing the feature information of the a cappella of the user with the feature information of the a cappella of the original singer.

9. The method according to claim 8, wherein the feature information of the a cappella of the user comprises a breathing location in the a cappella of the user, and the feature information of the a cappella of the original singer comprises the breathing location in the a cappella of the original singer; and
the displaying, by the electronic device, an evaluation result on the second interface by comparing the feature information of the a cappella of the user with the feature information of the a cappella of the original singer comprises:
displaying, by the electronic device, an evaluation result of a breathing skill on the second interface by comparing the breathing location in the a cappella of the user with the breathing location in the a cappella of the original singer.

10. The method according to claim 9, wherein the displaying, by the electronic device, an evaluation result of a breathing skill on the second interface by comparing the breathing location in the a cappella of the user with the breathing location in the a cappella of the original singer comprises:
if the breathing location in the a cappella of the user is the same as the breathing location in the a cappella of the original singer, displaying, by the electronic device on the second interface, a prompt indicating accurate breathing; or
if the breathing location in the a cappella of the user is different from the breathing location in the a cappella of the original singer, displaying, by the electronic device on the second interface, a prompt indicating a breathing error.

11. The method according to claim 8, wherein the feature information of the a cappella of the user comprises a the vibrato feature of the a cappella of the user, and the feature information of the a cappella of the original singer comprises a vibrato feature of the a cappella of the original singer; and
the displaying, by the electronic device, an evaluation result on the second interface by comparing the feature information of the a cappella of the user with the feature information of the a cappella of the original singer comprises:
displaying, by the electronic device, an evaluation result of a breathing skill on the second interface by comparing the vibrato feature of the a cappella of the user with the vibrato feature of the a cappella of the original singer.

12. The method according to claim 11, wherein the displaying, by the electronic device, an evaluation result of a breathing skill on the second interface by comparing the vibrato feature of the a cappella of the user with the vibrato feature of the a cappella of the original singer comprises:
if the vibrato feature of the a cappella of the user is the same as the vibrato feature of the a cappella of the original singer, displaying, by the electronic device on the second interface, a prompt indicating accurate vibrato; or
if the vibrato feature of the a cappella of the user is different from the vibrato feature of the a cappella of the original singer, displaying, by the electronic device on the second interface, a prompt indicating a vibrato error.

13. The method according to any one of claims 8 to 12, wherein the displaying, by the electronic device, an evaluation result on the second interface comprises:
displaying, by the electronic device, the evaluation result in the lyrics on the second interface; or
displaying, by the electronic device, the evaluation result in the singing tool on the second interface, wherein the singing tool is configured to display a note of each word in the lyrics.

14. The method according to any one of claims 1 to 13, wherein after the displaying, by the electronic device, guidance information on a second interface based on the feature information of the a cappella of the original singer, the method further comprises:
after recording of the first song ends, correcting, by the electronic device based on the feature information of the a cappella of the original singer, a singing problem that appears in the a cappella of the user, wherein the singing problem comprises one or more of a breathing problem and a vibrato problem.

15. An audio correction method, comprising:
displaying, by an electronic device, a first interface, wherein the first interface comprises a recording button used to record a first song;
in response to an operation of selecting the recording button by a user, obtaining, by the electronic device, accompaniment of the first song and feature information of a cappella of an original singer, wherein the feature information of the a cappella of the original singer may be used to reflect a singing feature of the original singer when the original singer sings the first song;
starting, by the electronic device, to play the accompaniment of the first song, and starting to record a cappella of the user that is sung by the user; and
after recording of the first song ends, correcting, by the electronic device based on the feature information of the a cappella of the original singer, a singing problem that appears in the a cappella of the user, wherein the singing problem comprises one or more of a breathing problem and a vibrato problem.

16. The method according to claim 15, wherein the singing problem is a breathing problem; and
the correcting, by the electronic device based on the feature information of the a cappella of the original singer, a singing problem that appears in the a cappella of the user comprises:
extracting, by the electronic device, breathing sound in the a cappella of the user from the a cappella of the user; and
reducing, by the electronic device, energy and a frequency response that are of the breathing sound in the a cappella of the user, to correct the breathing problem that appears in the a cappella of the user.

17. The method according to claim 15, wherein the singing problem is a vibrato problem; and
the correcting, by the electronic device based on the feature information of the a cappella of the original singer, a singing problem that appears in the a cappella of the user comprises:
extracting, by the electronic device, a vibrato feature of the a cappella of the user from the a cappella of the user; and
if the vibrato feature of the a cappella of the user does not match a vibrato feature in the feature information of the a cappella of the original singer, correcting, by the electronic device, the vibrato feature of the a cappella of the user by using the vibrato feature of the a cappella of the original singer, to correct the vibrato problem that appears in the a cappella of the user.

18. The method according to any one of claims 15 to 17, wherein after recording of the first song ends, the method further comprises:
displaying, by the electronic device, a second interface, wherein the second interface comprises an audio correction switch; and
the correcting, by the electronic device based on the feature information of the a cappella of the original singer, a singing problem that appears in the a cappella of the user comprises:
if it is detected that the user turns on the audio correction switch, correcting, by the electronic device based on the feature information of the a cappella of the original singer, the singing problem that appears in the a cappella of the user.

19. The method according to any one of claims 15 to 17, wherein after recording of the first song ends, the method further comprises:
displaying, by the electronic device, a second interface, wherein the second interface comprises an audio correction option, and the audio correction option comprises an intonation correction option, a breathing audio correction option, and a vibrato correction option; and
the correcting, by the electronic device based on the feature information of the a cappella of the original singer, a singing problem that appears in the a cappella of the user comprises:
in response to the audio correction option selected by the user, correcting, by the electronic device based on the feature information of the a cappella of the original singer, a singing problem that corresponds to the audio correction option and that appears in the a cappella of the user.

20. The method according to any one of claims 15 to 17, wherein after recording of the first song ends, the method further comprises:
displaying, by the electronic device, a second interface, wherein the second interface comprises a single-sentence refinement option; and
in response to the user's selection of the single-sentence refinement option, displaying, by the electronic device, a third interface, wherein the third interface comprises N sentences of lyrics of the first song, and N>1; and
the correcting, by the electronic device based on the feature information of the a cappella of the original singer, a singing problem that appears in the a cappella of the user comprises:
if the user selects first lyrics from the N sentences of the lyrics, correcting, by the electronic device based on the feature information in the a cappella of the original singer, a singing problem that corresponds to the first lyrics and that appears in the a cappella of the user.

21. The method according to claim 20, wherein the displaying, by the electronic device, a third interface comprises:
marking, by the electronic device in the N sentences of the lyrics on the third interface, a location at which the singing problem appears.

22. An electronic device, comprising:
a touchscreen, wherein the touchscreen comprises a touch-sensitive surface and a display;
one or more processors;
one or more memories;
one or more microphones; and
one or more computer programs, wherein the one or more computer programs are stored in the one or more memories, the one or more computer programs comprise an instruction, and when the instruction is executed by the electronic device, the electronic device is enabled to perform the song recording method according to any one of claims 1 to 14 or the audio correction method according to any one of claims 15 to 21.

23. A computer readable storage medium, wherein the computer readable storage medium stores an instruction, and when the instruction is run on an electronic device, the electronic device is enabled to perform the song recording method according to any one of claims 1 to 14 or the audio correction method according to any one of claims 15 to 21.

24. A computer program product comprising an instruction, wherein when the computer program product runs on an electronic device, the electronic device is enabled to perform the song recording method according to any one of claims 1 to 14 or the audio correction method according to any one of claims 15 to 21.

25. A graphical user interface GUI, wherein the graphical user interface is stored in an electronic device, the electronic device comprises a touchscreen, a memory, and a processor, the processor is configured to execute one or more computer programs stored in the memory, and the graphical user interface comprises:
a first GUI displayed on the touchscreen, wherein the first GUI comprises a recording button used to record a first song; and
a second GUI displayed on the touchscreen in response to a touch event for the recording button, wherein the second GUI is a recording interface for recording the first song, the second GUI comprises guidance information for guiding a user to sing the first song, and the guidance information comprises a breathing prompt and/or a vibrato prompt.

26. The GUI according to claim 25, wherein the second GUI further comprises an evaluation result of a breathing skill and/or a vibrato skill of the user during singing.

27. The GUI according to claim 25 or 26, wherein after the second GUI is displayed on the touchscreen, the GUI further comprises:
a third GUI displayed on the touchscreen after recording of the first song ends, wherein the third GUI is an audio correction interface of the first song, and the third GUI comprises an audio correction switch; and when the audio correction switch is turned on, the electronic device corrects a breathing problem and/or a vibrato problem that appear in a cappella of the user.
